(19) **Europäisches Patentamt / European Patent Office / Office européen des brevets**

(11) **EP 4 404 566 A1**

(12) **EUROPEAN PATENT APPLICATION**
published in accordance with Art. 153(4) EPC

(43) Date of publication:
**24.07.2024 Bulletin 2024/30**

(21) Application number: **22870307.0**

(22) Date of filing: **15.09.2022**

(51) International Patent Classification (IPC):
*H04N 19/513* (2014.01)   *H04N 19/176* (2014.01)
*H04N 19/105* (2014.01)   *H04N 19/56* (2014.01)
*H04N 19/70* (2014.01)   *H04N 19/543* (2014.01)
*H04N 19/57* (2014.01)   *H04N 19/132* (2014.01)
*H04N 19/593* (2014.01)   *H04N 19/119* (2014.01)

(52) Cooperative Patent Classification (CPC):
H04N 19/105; H04N 19/119; H04N 19/132;
H04N 19/176; H04N 19/513; H04N 19/543;
H04N 19/56; H04N 19/57; H04N 19/593;
H04N 19/70

(86) International application number:
**PCT/KR2022/013787**

(87) International publication number:
**WO 2023/043223 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.09.2021   KR 20210123305**
**10.01.2022   KR 20220003541**
**08.04.2022   KR 20220044068**

(71) Applicant: **KT Corporation**
**Seongnam-si, Gyeonggi-do 13606 (KR)**

(72) Inventor: **LIM, Sung Won**
**Seongnam-si, Gyeonggi-do 13606 (KR)**

(74) Representative: **Schmitt-Nilson Schraud Waibel Wohlfrom**
**Patentanwälte Partnerschaft mbB**
**Pelkovenstraße 143**
**80992 München (DE)**

(54) **VIDEO SIGNAL ENCODING/DECODING METHOD AND RECORDING MEDIUM HAVING BITSTREAM STORED THEREIN**

(57) A video decoding/encoding method includes obtaining a first prediction block for a current block on the basis of a first inter-prediction mode, obtaining a second prediction block for the current block on the basis of a second inter-prediction mode, and obtaining a final prediction block for the current block on the basis of the first prediction block and the second prediction block.

【FIG. 15】

```
┌─────────────────────────────────────────────────┐
│  GENERATE FIRST PREDICTION BLOCK ON BASIS        │── S1510
│      OF FIRST INTER-PREDICTION MODE              │
└─────────────────────────────────────────────────┘
                        ↓
┌─────────────────────────────────────────────────┐
│  GENERATE SECOND PREDICTION BLOCK ON BASIS       │── S1520
│     OF SECOND INTER-PREDICTION MODE              │
└─────────────────────────────────────────────────┘
                        ↓
┌─────────────────────────────────────────────────┐
│  GENERATE FINAL PREDICTION BLOCK ON BASIS OF     │── S1530
│ FIRST PREDICTION BLOCK AND SECOND PREDICTION BLOCK│
└─────────────────────────────────────────────────┘
```

**Description**

**BACKGROUND OF THE INVENTION**

**Field of the Invention**

The present disclosure relates to a video signal processing method and apparatus.

**Description of the Related Art**

Recently, demand for high-resolution, high-quality images such as high definition (HD) images and ultra-high definition (UHD) images has been increasing in various application fields. As the resolution and quality of video data increase, the amount of data increases relative to existing video data, and thus when video data is transmitted using media such as conventional wired or wireless broadband lines or stored using conventional storage media, transmission costs and storage costs increase. High-efficiency video compression techniques can be used to solve such problems occurring as the resolution and quality of video data increase.

There are various video compression techniques such as an inter-prediction technique for predicting pixel values included in the current picture from pictures before or after the current picture, an intra-prediction technique for predicting pixel values included in the current picture using pixel information in the current picture, and an entropy coding technique for allocating short codes to values with a high frequency of appearance and allocating long codes to values with a low frequency of appearance. By using these video compression techniques, video data can be effectively compressed and transmitted or stored.

Meanwhile, as the demand for high-resolution video increases, the demand for three-dimensional video content as a new video service is also increasing. Discussions are underway regarding video compression technology for effectively providing high-resolution and ultra-high-resolution three-dimensional video content.

**Disclosure**

**Technical Problem**

The present disclosure has been made in view of the above problems, and it is an object of the present disclosure to provide a method of performing motion estimation based on a reconstructed picture on a decoder side and an apparatus for performing the same.

It is another object of the present disclosure to provide a method of increasing prediction accuracy by combining a plurality of inter-prediction modes and an apparatus for performing the same.

It is further object of the present disclosure to provide a method of adaptively determining a search range for motion estimation and an apparatus for performing the same.

It is a further object of the present disclosure to provide a method of correcting motion information signaled from an encoder through motion estimation on the decoder side and an apparatus for performing the same.

The objects to be achieved by the present disclosure are not limited to the objects mentioned above, and other objects which are not mentioned can be clearly understood by those skilled in the art from the description below.

**Technical Solution**

In accordance with an aspect of the present invention, the above and other objects can be accomplished by the provision of a video decoding method including obtaining a first prediction block for a current block on the basis of a first inter-prediction mode, obtaining a second prediction block for the current block on the basis of a second inter-prediction mode, and obtaining a final prediction block for the current block on the basis of the first prediction block and the second prediction block.

In accordance with another aspect of the present disclosure, there is provided a video encoding method including obtaining a first prediction block for a current block on the basis of a first inter-prediction mode, obtaining a second prediction block for the current block on the basis of a second inter-prediction mode, and obtaining a final prediction block for the current block on the basis of the first prediction block and the second prediction block.

In the video decoding/encoding method according to the present disclosure, at least one of the first inter-prediction mode or the second inter-prediction mode may be a decoder-side motion estimation mode in which a decoder performs motion estimation in the same manner as an encoder using a previously reconstructed reference picture.

In the video decoding/encoding method according to the present disclosure, the motion estimation may include a process of searching for a combination with an optimal cost among combinations of a current template composed of a previously reconstructed area around the current block and a reference template of the same size as the current template within the reference picture.

In the video decoding/encoding method according to the present disclosure, the motion estimation may be performed on each of reference pictures having reference picture indices less than a threshold value in a reference picture list.

In the video decoding/encoding method according to the present disclosure, the motion estimation may be performed on each of reference pictures whose output order differences from a current picture are equal to or less than a threshold value in the reference picture list.

In the video decoding/encoding method according to the present disclosure, the reference template may be searched for within a search range set in the reference picture, and the search range may be set on the basis of initial motion information of the current block.

In the video decoding/encoding method according to the present disclosure, the initial motion information may be motion information on an area larger than the current block.

In the video decoding/encoding method according to the present disclosure, the reference template may be searched for within the search range set in the reference picture, the search range may be determined on the basis of motion characteristics of an area including the current block, and the motion characteristics of the area may be set to one of an area with strong motion or an area with weak motion.

In the video decoding/encoding method according to the present disclosure, the motion estimation may include a process of searching for a combination with an optimal cost among combinations of an L0 reference block included in an L0 reference picture and an L1 reference block included in an L1 reference picture.

In the video decoding/encoding method according to the present disclosure, an output order of the current picture may be in between an output order of the L0 reference picture and an output order of the L1 reference picture.

In the video decoding/encoding method according to the present disclosure, the first inter-prediction mode may be used for L0 direction prediction of the current block, and the second inter-prediction mode may be used for L1 direction prediction of the current block.

In the video decoding/encoding method according to the present disclosure, the final prediction block may be derived on the basis of a weighted sum operation of the first prediction block and the second prediction block, and a first weight assigned to the first prediction block and a second weight assigned to the second prediction block during the weighted sum operation may be adaptively determined depending on a type of the first inter-prediction mode or the second inter-prediction mode.

In the video decoding/encoding method according to the present disclosure, the first weight may have a value greater than the second weight in a case where the first inter-prediction mode is a decoder-side motion estimation mode and the second inter-prediction mode is a motion information signaling mode.

The features briefly summarized above with respect to the present disclosure are merely exemplary aspects of the detailed description of the present disclosure described below and do not limit the scope of the present disclosure.

**Technical Effect**

According to the present disclosure, signaling overhead may be reduced by performing motion estimation based on a pre-reconstructed picture at a decoder side.

According to the present disclosure, prediction accuracy may be increased by combining a plurality of inter-prediction modes.

According to the present disclosure, complexity of an encoder/decoder may be reduced by providing a method of determining a sear range for motion estimation, adaptively.

According to the present disclosure, prediction accuracy may be improved by correcting motion information, signaled from an encoder, through motion estimation at a decoder side.

Effects obtainable from the present disclosure are not limited to the above-mentioned effects and other unmentioned effects may be clearly understood from the following description by those having ordinary skill in the technical field to which the present disclosure pertains.

**BRIEF DESCRIPTION OF THE DRAWINGS**

FIG. 1 is a block diagram showing an image encoding device according to an embodiment of the present disclosure.
FIG. 2 is a block diagram showing an image decoding device according to an embodiment of the present disclosure.
FIG. 3 shows an example in which motion estimation is performed.
FIGs. 4 and 5 show an example in which a prediction block for a current block is generated on the basis of motion information generated through motion estimation.

FIG. 6 shows positions referenced to derive a motion vector prediction value.

FIG. 7 is a diagram illustrating a template-based motion estimation method.

FIG. 8 shows examples of template configuration.

FIG. 9 is a diagram illustrating a motion estimation method based on a bidirectional matching method.

FIG. 10 is a diagram illustrating a motion estimation method based on a unidirectional matching method.

FIG. 11 shows predefined intra-prediction modes.

FIG. 12 shows an example in which a prediction sample is generated in a planar mode.

FIG. 13 shows an example in which a prediction sample is generated in a DC mode.

FIG. 14 shows an example in which a prediction sample is generated in a directional intra-prediction mode.

FIG. 15 is a flowchart showing a method of deriving a prediction block for a current block using a combined prediction method.

FIG. 16 shows an example in which a plurality of prediction blocks is generated according to a combined prediction method.

FIG. 17 shows various examples in which the current block is partitioned according to partition types.

FIG. 18 is an example showing directions in which a partitioning line for partitioning the current block is located.

FIG. 19 is an example showing locations of partitioning lines.

FIG. 20 shows an example in which the current block is partitioned according to the description of FIGs. 18 and 19.

FIG. 21 shows an example of deriving a prediction sample in a weighted sum area and an unweighted sum area.

FIG. 22 shows an example in which a filter is applied based on the boundary between a weighted sum area and an unweighted sum area.

FIG. 23 is a flowchart of a search range adjustment method according to an embodiment of the present disclosure.

FIGs. 24 and 25 show an example in which a current picture is partitioned into a plurality of areas.

FIG. 26 shows an example in which a search range is set around a reference point.

FIG. 27 shows an example of determining motion characteristics of a current picture.

FIG. 28 shows an example of partitioning a current picture and a reference picture into a plurality of areas.

FIG. 29 is a diagram illustrating an example in which motion information for each sub-block is corrected.

## DETAILED DESCRIPTION OF THE INVENTION

As the present disclosure may make various changes and have several embodiments, specific embodiments will be illustrated in a drawing and described in detail. But, it is not intended to limit the present disclosure to a specific embodiment, and it should be understood that it includes all changes, equivalents or substitutes included in an idea and a technical scope for the present disclosure. A similar reference numeral was used for a similar component while describing each drawing.

A term such as first, second, etc. may be used to describe various components, but the components should not be limited by the terms. The terms are used only to distinguish one component from other components. For example, without going beyond a scope of a right of the present disclosure, a first component may be referred to as a second component and similarly, a second component may be also referred to as a first component. A term of and/or includes a combination of a plurality of relative entered items or any item of a plurality of relative entered items.

When a component is referred to as being "linked" or "connected" to other component, it should be understood that it may be directly linked or connected to that other component, but other component may exist in the middle. On the other hand, when a component is referred to as being "directly linked" or "directly connected" to other component, it should be understood that other component does not exist in the middle.

As terms used in this application are just used to describe a specific embodiment, they are not intended to limit the present disclosure. Expression of the singular includes expression of the plural unless it clearly has a different meaning contextually. In this application, it should be understood that a term such as "include" or "have", etc. is to designate the existence of characteristics, numbers, steps, motions, components, parts or their combinations entered in the specification, but is not to exclude a possibility of addition or existence of one or more other characteristics, numbers, steps, motions, components, parts or their combinations in advance.

Hereinafter, referring to the attached drawings, a desirable embodiment of the present disclosure will be described in more detail. Hereinafter, the same reference numeral is used for the same component in a drawing and an overlapping description for the same component is omitted.

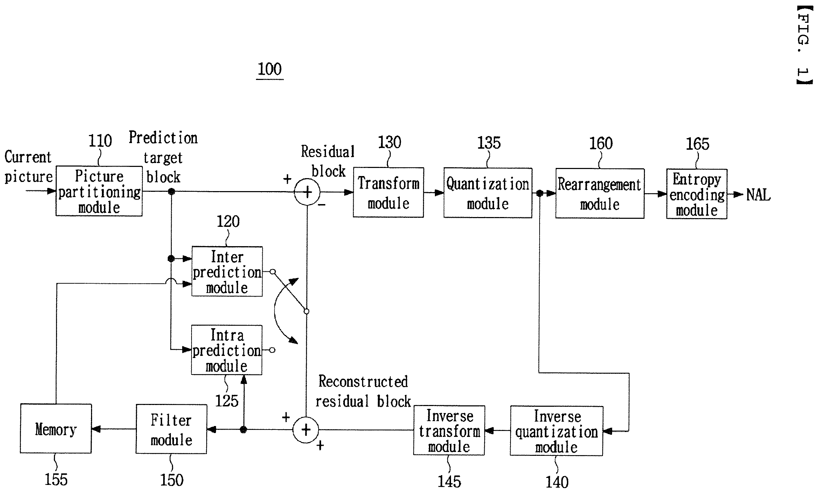

FIG. 1 is a block diagram showing an image encoding device according to an embodiment of the present disclosure.

Referring to FIG. 1, an image encoding device 100 may include a picture partitioning unit 110, prediction units 120 and 125, a transform unit 130, a quantization unit 135, a rearrangement unit 160, an entropy encoding unit 165, a dequantization unit 140, an inverse-transform unit 145, a filter unit 150, and a memory 155.

As each construction unit shown in FIG. 1 is independently shown to represent different characteristic functions in an image encoding device, it does not mean that each construction unit is constituted by separated hardware or one software unit. That is, as each construction unit is included by being enumerated as each construction unit for convenience of a description, at least two construction units of each construction unit may be combined to constitute one construction unit or one construction unit may be partitioned into a plurality of construction units to perform a function, and even an integrated embodiment and a separated embodiment of each construction unit are also included in a scope of a right of the present disclosure unless they are departing from the essence of the present disclosure.

Further, some components may be just an optional component for improving performance, not a necessary component which perform an essential function in the present disclosure. The present disclosure may be implemented by including only a construction unit necessary for implementing the essence of the present disclosure excluding a component used to just improve performance, and a structure including only a necessary component excluding an optional component used to just improve performance is also included in a scope of a right of the present disclosure.

A picture partitioning unit 110 may partition an input picture into at least one processing unit. In this case, a processing unit may be a prediction unit (PU), a transform unit (TU) or a coding unit (CU). In a picture partitioning unit 110, one picture may be partitioned into a combination of a plurality of coding units, prediction units and transform units and a picture may be encoded by selecting a combination of one coding unit, prediction unit and transform unit according to a predetermined standard (e.g., a cost function) .

For example, one picture may be partitioned into a plurality of coding units. In order to partition a coding unit in a picture, a recursive tree structure such as a quad tree, a ternary tree or a binary tree may be used, and a coding unit which is partitioned into other coding units by using one image or the largest coding unit as a route may be partitioned with as many child nodes as the number of partitioned coding units. A coding unit which is no longer partitioned according to a certain restriction becomes a leaf node. In an example, when it is assumed that quad tree partitioning is applied to one coding unit, one coding unit may be partitioned into up to four other coding units.

Hereinafter, in an embodiment of the present disclosure, a coding unit may be used as a unit for encoding or may be used as a unit for decoding.

A prediction unit may be partitioned with at least one square or rectangular shape, etc. in the same size in one coding unit or may be partitioned so that any one prediction unit of prediction units partitioned in one coding unit can have a shape and/or a size different from another prediction unit.

In intra prediction, a transform unit may be configured to be the same as a prediction unit. In this case, after partitioning a coding unit into a plurality of transform units, intra prediction may be performed per each transform unit. A coding unit may be partitioned in a horizontal direction or in a vertical direction. The number of transform units generated by partitioning a coding unit may be 2 or 4 according to a size of a coding unit.

Prediction units 120 and 125 may include an inter prediction unit 120 performing inter prediction and an intra prediction unit 125 performing intra prediction. Whether to perform inter prediction or intra prediction for a coding unit may be determined and detailed information according to each prediction method (e.g., an intra prediction mode, a motion vector, a reference picture, etc.) may be determined. In this case, a processing unit that prediction is performed may be different from a processing unit that a prediction method and details are determined. For example, a prediction method, a prediction mode, etc. may be determined in a coding unit and prediction may be performed in a prediction unit or a transform unit. A residual value (a residual block) between a generated prediction block and an original block may be input to a transform unit 130. In addition, prediction mode information, motion vector information, etc. used for prediction may be encoded with a residual value in an entropy encoding unit 165 and may be transmitted to a decoding device. When a specific encoding mode is used, an original block may be encoded as it is and transmitted to a decoding unit without generating a prediction block through prediction units 120 or 125.

An inter prediction unit 120 may predict a prediction unit based on information on at least one picture of a previous picture or a subsequent picture of a current picture, or in some cases, may predict a prediction unit based on information on some encoded regions in a current picture. An inter prediction unit 120 may include a reference picture interpolation unit, a motion prediction unit and a motion compensation unit.

A reference picture interpolation unit may receive reference picture information from a memory 155 and generate pixel information equal to or less than an integer pixel in a reference picture. For a luma pixel, a 8-tap DCT-based interpolation filter having a different filter coefficient may be used to generate pixel information equal to or less than an integer pixel in a 1/4 pixel unit. For a chroma signal, a 4-tap DCT-based interpolation filter having a different filter coefficient may be used to generate pixel information equal to or less than an integer pixel in a 1/8 pixel unit.

A motion prediction unit may perform motion prediction based on a reference picture interpolated by a reference picture interpolation unit. As a method for calculating a motion vector, various methods such as FBMA (Full search-based Block Matching Algorithm), TSS (Three Step Search), NTS (New Three-Step Search Algorithm), etc. may be used. A motion vector may have a motion vector value in a 1/2 or 1/4 pixel unit based on an interpolated pixel. A motion prediction unit may predict a current prediction unit by varying a motion prediction method. As a motion prediction method, various methods such as a skip method, a merge method, an advanced motion vector prediction (AMVP) method, an intra block copy method, etc. may be used.

An intra prediction unit 125 may generate a prediction unit based on reference pixel information which is pixel information in a current picture. Reference pixel information may be derived from selected one of a plurality of reference pixel lines. A N-th reference pixel line among a plurality of reference pixel lines may include left pixels whose x-axis difference with a top-left pixel in a current block is N and top pixels whose y-axis difference with the top-left pixel is N. The number of reference pixel lines which may be selected by a current block may be 1, 2, 3 or 4.

When a neighboring block in a current prediction unit is a block which performed inter prediction and accordingly, a reference pixel is a pixel which performed inter prediction, a reference pixel included in a block which performed inter prediction may be used by being replaced with reference pixel information of a surrounding block which performed intra prediction. In other words, when a reference pixel is unavailable, unavailable reference pixel information may be used by being replaced with at least information of available reference pixels.

A prediction mode in intra prediction may have a directional prediction mode using reference pixel information according to a prediction direction and a non-directional mode not using directional information when performing prediction. A mode for predicting luma information may be different from a mode for predicting chroma information and intra prediction mode information used for predicting luma information or predicted luma signal information may be utilized to predict chroma information.

When a size of a prediction unit is the same as that of a transform unit in performing intra prediction, intra prediction for a prediction unit may be performed based on a pixel at a left position of a prediction unit, a pixel at a top-left position and a pixel at a top position.

An intra prediction method may generate a prediction block after applying a smoothing filter to a reference pixel according to a prediction mode. According to a selected reference pixel line, whether a smoothing filter is applied may be determined.

In order to perform an intra prediction method, an intra prediction mode in a current prediction unit may be predicted from an intra prediction mode in a prediction unit around a current prediction unit. When a prediction mode in a current prediction unit is predicted by using mode information predicted from a surrounding prediction unit, information that a prediction mode in a current prediction unit is the same as a prediction mode in a surrounding prediction unit may be transmitted by using predetermined flag information if an intra prediction mode in a current prediction unit is the same as an intra prediction mode in a surrounding prediction unit, and prediction mode information of a current block may be encoded by performing entropy encoding if a prediction mode in a current prediction unit is different from a prediction mode in a surrounding prediction unit.

In addition, a residual block may be generated which includes information on a residual value that is a difference value between a prediction unit which performed prediction based on a prediction unit generated in prediction units 120 and 125 and an original block in a prediction unit. A generated residual block may be input to a transform unit 130.

A transform unit 130 may transform an original block and a residual block including residual value information in a prediction unit generated through prediction units 120 and 125 by using a transform method such as DCT (Discrete Cosine Transform), DST (Discrete Sine Transform), KLT. Whether to apply DCT, DST or KLT to transform a residual block may be determined based on at least one of a size of a transform unit, a form of a transform unit, a prediction mode in a prediction unit or intra prediction mode information in a prediction unit.

A quantization unit 135 may quantize values transformed into a frequency domain in a transform unit 130. A quantization coefficient may be changed according to a block or importance of an image. A value calculated in a quantization unit 135 may be provided to a dequantization unit 140 and a rearrangement unit 160.

A rearrangement unit 160 may perform rearrangement of a coefficient value for a quantized residual value.

A rearrangement unit 160 may change a coefficient in a shape of a two-dimensional block into a shape of a one-dimensional vector through a coefficient scan method. For example, a rearrangement unit 160 may scan a DC coefficient to a coefficient in a high-frequency domain by using a zig-zag scan method and change it into a shape of a one-dimensional vector. According to a size of a transform unit and an intra prediction mode, instead of zig-zag scan, vertical scan where a coefficient in a shape of a two-dimensional block is scanned in a column direction, horizontal scan where a coefficient in a shape of a two-dimensional block is scanned in a row direction or diagonal scan where a coefficient in a shape of a two-dimensional block is scanned in a diagonal direction may be used. In other words, which scan method among zig-zag scan, vertical directional scan, horizontal directional scan or diagonal scan will be used may be determined according to a size of a transform unit and an intra prediction mode.

An entropy encoding unit 165 may perform entropy encoding based on values calculated by a rearrangement unit 160. Entropy encoding, for example, may use various encoding methods such as exponential Golomb, CAVLC(Context-Adaptive Variable Length Coding), CABAC(Context-Adaptive Binary Arithmetic Coding).

An entropy encoding unit 165 may encode a variety of information such as residual value coefficient information and block type information in a coding unit, prediction mode information, partitioning unit information, prediction unit information and transmission unit information, motion vector information, reference frame information, block interpolation information, filtering information, etc. from a rearrangement unit 160 and prediction units 120 and 125.

An entropy encoding unit 165 may perform entropy encoding for a coefficient value in a coding unit which is input from a rearrangement unit 160.

A dequantization unit 140 and an inverse transform unit 145 dequantize values quantized in a quantization unit 135 and inversely transform values transformed in a transform unit 130. A residual value generated by a dequantization unit 140 and an inverse transform unit 145 may be combined with a prediction unit predicted by a motion prediction unit, a motion compensation unit and an intra prediction unit included in prediction units 120 and 125 to generate a reconstructed block.

A filter unit 150 may include at least one of a deblocking filter, an offset correction unit and an adaptive loop filter (ALF).

A deblocking filter may remove block distortion which is generated by a boundary between blocks in a reconstructed picture. In order to determine whether deblocking is performed, whether a deblocking filter will be applied to a current block may be determined based on a pixel included in several rows or columns included in a block. When a deblocking filter is applied to a block, a strong filter or a weak filter may be applied according to required deblocking filtering strength. In addition, in applying a deblocking filter, when horizontal filtering and vertical filtering are performed, horizontal directional filtering and vertical directional filtering may be set to be processed in parallel.

An offset correction unit may correct an offset with an original image in a unit of a pixel for an image that deblocking was performed. In order to perform offset correction for a specific picture, a region where an offset will be performed may be determined after dividing a pixel included in an image into the certain number of regions and a method in which an offset is applied to a corresponding region or a method in which an offset is applied by considering edge information of each pixel may be used.

Adaptive loop filtering (ALF) may be performed based on a value obtained by comparing a filtered reconstructed image with an original image. After a pixel included in an image is divided into predetermined groups, filtering may be discriminately performed per group by determining one filter which will be applied to a corresponding group. Information related to whether to apply ALF may be transmitted per coding unit (CU) for a luma signal and a shape and a filter coefficient of an ALF filter to be applied may vary according to each block. In addition, an ALF filter in the same shape (fixed shape) may be applied regardless of a characteristic of a block to be applied.

A memory 155 may store a reconstructed block or picture calculated through a filter unit 150 and a stored reconstructed block or picture may be provided to prediction units 120 and 125 when performing inter prediction.

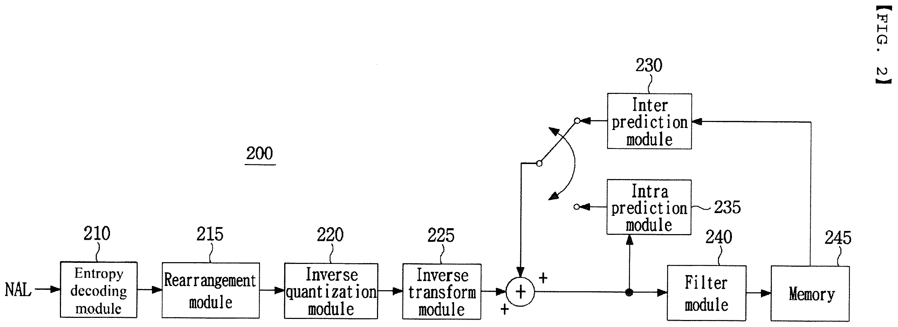

FIG. 2 is a block diagram showing an image decoding device according to an embodiment of the present disclosure.

Referring to FIG. 2, an image decoding device 200 may include an entropy decoding unit 210, a rearrangement unit 215, a dequantization unit 220, an inverse transform unit 225, prediction units 230 and 235, a filter unit 240, and a memory 245.

When an image bitstream is input from an image encoding device, an input bitstream may be decoded according to a procedure opposite to that of an image encoding device.

An entropy decoding unit 210 may perform entropy decoding according to a procedure opposite to a procedure in which entropy encoding is performed in an entropy encoding unit of an image encoding device. For example, in response to a method performed in an image encoding device, various methods such as Exponential Golomb, CAVLC (Context-Adaptive Variable Length Coding), CABAC (Context-Adaptive Binary Arithmetic Coding) may be applied.

An entropy decoding unit 210 may decode information related to intra prediction and inter prediction performed in an encoding device.

A rearrangement unit 215 may perform rearrangement based on a method that a bitstream entropy-decoded in an entropy decoding unit 210 is rearranged in an encoding unit. Coefficients expressed in a form of a one-dimensional vector may be rearranged by being reconstructed into coefficients in a form of a two-dimensional block. A rearrangement unit 215 may receive information related to coefficient scanning performed in an encoding unit and perform rearrangement through a method in which scanning is inversely performed based on scanning order performed in a corresponding encoding unit.

A dequantization unit 220 may perform dequantization based on a quantization parameter provided from an encoding device and a coefficient value of a rearranged block.

An inverse transform unit 225 may perform transform performed in a transform unit, i.e., inverse transform for DCT, DST, and KLT, i.e., inverse DCT, inverse DST and inverse KLT for a result of quantization performed in an image encoding device. Inverse transform may be performed based on a transmission unit determined in an image encoding device. In an inverse transform unit 225 of an image decoding device, a transform technique (for example, DCT, DST, KLT) may be selectively performed according to a plurality of information such as a prediction method, a size or a shape of a current block, a prediction mode, an intra prediction direction, etc.

Prediction units 230 and 235 may generate a prediction block based on information related to generation of a prediction block provided from an entropy decoding unit 210 and pre-decoded block or picture information provided from a memory 245.

As described above, when a size of a prediction unit is the same as a size of a transform unit in performing intra prediction in the same manner as an operation in an image encoding device, intra prediction for a prediction unit may be performed based on a pixel at a left position of a prediction unit, a pixel at a top-left position and a pixel at a top position, but when a size of a prediction unit is different from a size of a transform unit in performing intra prediction, intra prediction may be performed by using a reference pixel based on a transform unit. In addition, intra prediction using N×N partitioning may be used only for the smallest coding unit.

Prediction units 230 and 235 may include a prediction unit determination unit, an inter prediction unit and an intra prediction unit. A prediction unit determination unit may receive a variety of information such as prediction unit information, prediction mode information of an intra prediction method, motion prediction-related information of an inter prediction method, etc. which are input from an entropy decoding unit 210, divide a prediction unit in a current coding unit and determine whether a prediction unit performs inter prediction or intra prediction. An inter prediction unit 230 may perform inter prediction for a current prediction unit based on information included in at least one picture of a previous picture or a subsequent picture of a current picture including a current prediction unit by using information necessary for inter prediction in a current prediction unit provided from an image encoding device. Alternatively, inter prediction may be performed based on information on some regions which are pre-reconstructed in a current picture including a current prediction unit.

In order to perform inter prediction, whether a motion prediction method in a prediction unit included in a corresponding coding unit is a skip mode, a merge mode, an AMVP mode, or an intra block copy mode may be determined based on a coding unit.

An intra prediction unit 235 may generate a prediction block based on pixel information in a current picture. When a prediction unit is a prediction unit which performed intra prediction, intra prediction may be performed based on intra prediction mode information in a prediction unit provided from an image encoding device. An intra prediction unit 235 may include an adaptive intra smoothing (AIS) filter, a reference pixel interpolation unit and a DC filter. As a part performing filtering on a reference pixel of a current block, an AIS filter may be applied by determining whether a filter is applied according to a prediction mode in a current prediction unit. AIS filtering may be performed for a reference pixel of a current block by using AIS filter information and a prediction mode in a prediction unit provided from an image encoding device. When a prediction mode of a current block is a mode which does not perform AIS filtering, an AIS filter may not be applied

When a prediction mode in a prediction unit is a prediction unit which performs intra prediction based on a pixel value which interpolated a reference pixel, a reference pixel interpolation unit may interpolate a reference pixel to generate a reference pixel in a unit of a pixel equal to or less than an integer value. When a prediction mode in a current prediction unit is a prediction mode which generates a prediction block without interpolating a reference pixel, a reference pixel may not be interpolated. A DC filter may generate a prediction block through filtering when a prediction mode of a current block is a DC mode.

A reconstructed block or picture may be provided to a filter unit 240. A filter unit 240 may include a deblocking filter, an offset correction unit and ALF.

Information on whether a deblocking filter was applied to a corresponding block or picture and information on whether a strong filter or a weak filter was applied when a deblocking filter was applied may be provided from an image encoding device. Information related to a deblocking filter provided from an image encoding device may be provided in a deblocking filter of an image decoding device and deblocking filtering for a corresponding block may be performed in an image decoding device.

An offset correction unit may perform offset correction on a reconstructed image based on offset value information, a type of offset correction, etc. applied to an image when performing encoding.

ALF may be applied to a coding unit based on information on whether ALF is applied, ALF coefficient information, etc. provided from an encoding device. Such ALF information may be provided by being included in a specific parameter set.

A memory 245 may store a reconstructed picture or block for use as a reference picture or a reference block and provide a reconstructed picture to an output unit.

As described above, hereinafter, the term "coding unit" is used as a coding unit for convenience of description in embodiments of the present disclosure, but it may also be a unit in which decoding is performed.

In addition, the current block represents an encoding/decoding target block, and depending on the encoding/decoding stage, the current block may represent a coding tree block (or a coding tree unit), a coding block (or a coding unit), a transform block (or a transform unit), a prediction block (or a prediction unit), or a block to which an in-loop filter is applied. In this specification, "unit" may represent a basic unit for performing a specific encoding/decoding process, and "block" may represent a pixel array of a predetermined size. Unless otherwise specified, "block" and "unit" can be used with the same meaning. For example, in embodiments which will be described later, a coding block and a coding unit may be understood to have equivalent meanings.

Furthermore, a picture including the current block will be referred to as a current picture.

At the time of encoding the current picture, redundant data between pictures can be removed through inter-prediction. Inter-prediction can be performed on a block basis. Specifically, a prediction block for the current block can be generated from a reference picture using motion information of the current block. Here, the motion information may include at least one of a motion vector, a reference picture index, or a prediction direction.

The motion information of the current block can be generated through motion estimation.

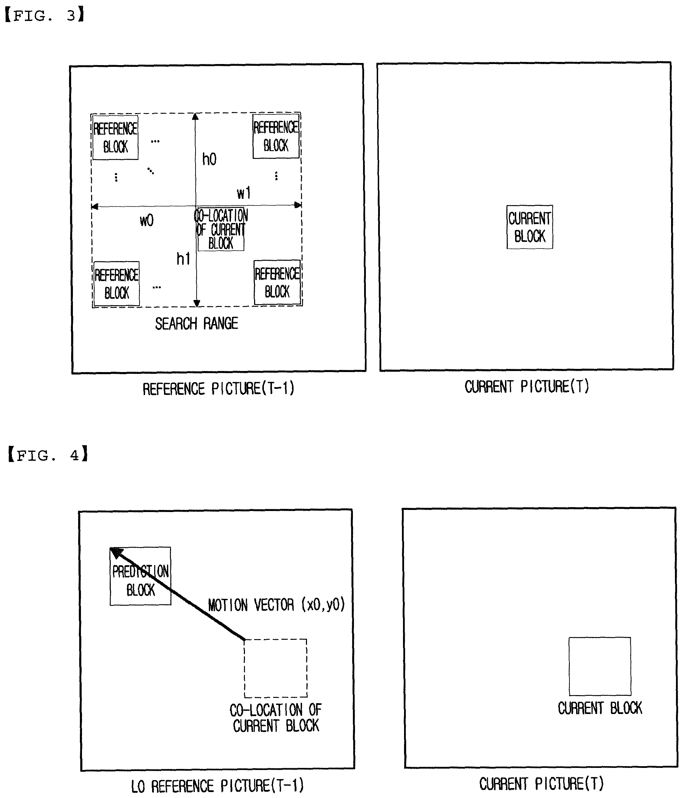

FIG. 3 shows an example in which motion estimation is performed.

In FIG. 3, it is assumed that the Picture Order Count (POC) of the current picture is T and the POC of a reference picture is (T-1).

A search range for motion estimation may be set from the same position as a reference point of the current block in the reference picture. Here, the reference point may be the position of the upper left sample of the current block.

As an example, FIG. 3 illustrates that a rectangle having a size of (w0+w01) and (h0+h1) is set as a search range with the reference point as a center. In this example, w0, w1, h0, and h1 may have the same value. Alternatively, at least one of w0, w1, h0, or h1 may be set to have a different value from the others. Alternatively, the sizes of w0, w1, h0, and h1 may be determined so as not to exceed a coding tree unit (CTU) boundary, a slice boundary, a tile boundary, or a picture boundary.

After setting reference blocks having the same size as the current block within the search range, a cost for each reference block with respect to the current block may be measured. The cost may be calculated using a similarity between two blocks.

As an example, the cost may be calculated on the basis of the absolute sum of difference values between original samples in the current block and original samples (or reconstructed samples) in each reference block. As the absolute sum decreases, the cost can decrease.

After comparing the costs of the reference blocks, a reference block with the optimal cost can be set as a prediction block for the current block.

Additionally, the distance between the current block and the reference block can be set as a motion vector. Specifically, the x-coordinate difference and y-coordinate difference between the current block and the reference block may be set as a motion vector.

Furthermore, the index of a picture containing the reference block identified through motion estimation is set as a reference picture index.

Additionally, a prediction direction can be set on the basis of whether the reference picture belongs to an L0 reference picture list or an L1 reference picture list.

Further, motion estimation may be performed for each of an L0 direction and an L1 direction. If prediction is performed in both the L0 direction and the L1 direction, motion information in the L0 direction and motion information in the L1 direction can be generated.

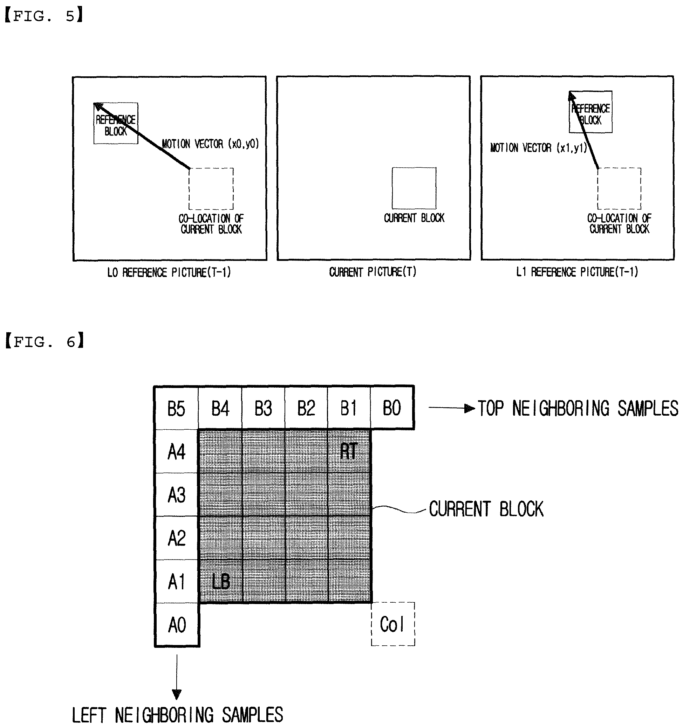

FIGs. 4 and 5 show an example in which a prediction block for the current block is generated on the basis of motion information generated through motion estimation.

FIG. 4 shows an example of generating a prediction block through unidirectional (i.e., L0 direction) prediction, and FIG. 5 shows an example of generating a prediction block through bidirectional (i.e., L0 and L1 directions) prediction.

In the case of unidirectional prediction, a prediction block for the current block is generated using one piece of motion information. As an example, the motion information may include an L0 motion vector, an L0 reference picture index, and prediction direction information indicating the L0 direction.

In the case of bidirectional prediction, a prediction block is created using two pieces of motion information. As an example, a reference block in the L0 direction identified based on motion information on the L0 direction (LO motion information) may be set as an L0 prediction block, and a reference block in the L1 direction identified based on motion information on the L1 direction (L1 motion information) may be set as an L1 prediction block. Thereafter, the L0 prediction block and the L1 prediction block can be subjected to weighted summation to generate a prediction block for the current block.

In the examples shown in FIGs. 3 to 5, the L0 reference picture is present before the current picture (i.e., the POC value is smaller than the current picture), and the L1 reference picture is present after the current picture (i.e., the POC value is greater than the current picture).

However, unlike the examples, the L0 reference picture may be present after the current picture, or the L1 reference picture may be present before the current picture. For example, both the L0 reference picture and the L1 reference picture may be present before the current picture, or both may be present after the current picture. Alternatively, bidirectional prediction may be performed using the L0 reference picture present after the current picture and the L1 reference picture present before the current picture.

Motion information of a block on which inter-prediction has been performed may be stored in a memory. In this case, the motion information may be stored in sample units. Specifically, motion information of a block to which a specific sample belongs may be stored as motion information of the specific sample. The stored motion information can be used to derive motion information of a neighboring block to be encoded/decoded later.

An encoder may signal information obtained by encoding a residual sample corresponding to the difference value between the sample (i.e., original sample) of the current block and the prediction sample and the motion information necessary to generate the prediction block to a decoder. The decoder may decode information on the signaled difference value to derive a difference sample, and add a prediction sample within the prediction block generated using motion information to the difference sample to generate a reconstructed sample.

Here, in order to effectively compress the motion information signaled to the decoder, one of a plurality of inter-prediction modes may be selected. Here, the plurality of inter-prediction modes may include a motion information merge mode and a motion vector prediction mode.

The motion vector prediction mode is a mode in which the difference value between a motion vector and a motion vector prediction value is encoded and signaled. Here, the motion vector prediction value may be derived based on motion information of neighboring blocks or neighboring samples adjacent to the current block.

FIG. 6 shows positions referenced to derive a motion vector prediction value.

For convenience of description, it is assumed that the current block has a size of $4\times4$.

In the illustrated example, "LB" indicates a sample included in the leftmost column and bottommost row in the current block. "RT" indicates a sample included in the rightmost column and topmost row in the current block. AO to A4 indicate samples neighboring the left of the current block, and BO to B5 indicate samples neighboring the top of the current block. As an example, A1 indicates a sample neighboring the left of LB, and B1 indicates sample neighboring the top of RT.

Col indicates the position of a sample neighboring the bottom right of the current block in a co-located picture. The co-located picture is a different picture from the current picture, and information for identifying the co-located picture can be explicitly encoded and signaled in a bitstream. Alternatively, a reference picture with a predefined reference picture index may be set as a co-located picture.

The motion vector prediction value of the current block may be derived from at least one motion vector prediction candidate included in a motion vector prediction list.

The number of motion vector prediction candidates that can be included in the motion vector prediction list (i.e., the size of the list) may be predefined in the encoder and decoder. As an example, the maximum number of motion vector prediction candidates may be two.

A motion vector stored at the position of a neighboring sample adjacent to the current block or a scaled motion vector derived by scaling the motion vector may be inserted into the motion vector prediction list as a motion vector prediction candidate. At this time, motion vector prediction candidates may be derived by scanning neighboring samples adjacent to the current block in a predefined order.

As an example, it can be checked whether a motion vector is stored at each position in the order from AO to A4. According to this scan order, the first discovered available motion vector can be inserted into the motion vector prediction list as a motion vector prediction candidate.

As another example, it is checked whether a motion vector is stored at each location in the order from AO to A4, and the first discovered motion vector corresponding to the position having the same reference picture as the current block may be inserted into the motion vector prediction list as a motion vector prediction candidate. If there is no neighboring sample having the same reference picture as the current block, a motion vector prediction candidate can be derived based on the first discovered available vector. Specifically, after scaling the first discovered available motion vector, the scaled motion vector can be inserted into the motion vector prediction list as a motion vector prediction candidate. Here, scaling may be performed on the basis of the output order difference between the current picture and the reference picture (i.e., POC difference) and the output order difference between the current picture and the reference picture of a neighboring sample (i.e., POC difference).

Furthermore, it is possible to check whether a motion vector is stored at each position in the order from BO to B5. According to this scan order, the first discovered available motion vector can be inserted into the motion vector prediction list as a motion vector prediction candidate.

As another example, it is possible to check whether a motion vector is stored at each position in the order from BO to B5, and the first discovered motion vector corresponding to the position having the same reference picture as the current block may be inserted into the motion vector prediction list as a motion vector prediction candidate. If there is no neighboring sample having the same reference picture as the current block, a motion vector prediction candidate can be derived based on the first discovered available vector. Specifically, after scaling the first discovered available motion vector, the scaled motion vector can be inserted into the motion vector prediction list as a motion vector prediction candidate. Here, scaling may be performed on the basis of the output order difference between the current picture and the reference picture (i.e., POC difference) and the output order difference between the current picture and the reference picture of a neighboring sample (i.e., POC difference).

As in the above-described example, a motion vector prediction candidate can be derived from a sample adjacent to the left of the current block, and a motion vector prediction candidate can be derived from a sample adjacent to the top of the current block.

Here, the motion vector prediction candidate derived from the left sample may be inserted into the motion vector prediction list prior to the motion vector prediction candidate derived from the top sample. In this case, the index assigned to the motion vector prediction candidate derived from the left sample may have a smaller value than the index assigned to the motion vector prediction candidate derived from the top sample.

On the other hand, the motion vector prediction candidate derived from the top sample may be inserted into the motion vector prediction list prior to the motion vector prediction candidate derived from the left sample.

Among motion vector prediction candidates included in the motion vector prediction list, a motion vector prediction candidate with the highest coding efficiency may be set as a motion vector predictor (MVP) of the current block. Additionally, index information indicating the motion vector prediction candidate that is set as the motion vector predictor of the current block among the plurality of motion vector prediction candidates may be encoded and signaled to the decoder. When the number of motion vector prediction candidates is two, the index information may be a 1-bit flag (e.g., MVP flag). Additionally, a motion vector difference (MVD), which is the difference between the motion vector of the current block and the motion vector predictor, can be encoded and signaled to the decoder.

The decoder can construct a motion vector prediction list in the same way as the encoder. Additionally, the decoder may decode index information from a bitstream and select one of a plurality of motion vector prediction candidates on the basis of the decoded index information. The selected motion vector prediction candidate can be set as the motion vector predictor of the current block.

Additionally, the decoder may decode a motion vector difference from the bitstream. Thereafter, the decoder may derive the motion vector of the current block by summing the motion vector predictor and the motion vector difference.

In a case where bidirectional prediction is applied to the current block, a motion vector prediction list can be generated for each of the L0 direction and L1 direction. That is, a motion vector prediction list may be composed of motion vectors in the same direction. Accordingly, the motion vector of the current block and the motion vector prediction candidates included in the motion vector prediction list have the same direction.

In a case where the motion vector prediction mode is selected, a reference picture index and prediction direction information may be explicitly encoded and signaled to the decoder. As an example, in a case where a plurality of reference pictures is present in a reference picture list and motion estimation is performed on each of the plurality of reference pictures, a reference picture index for identifying a reference picture from which the motion information of the current block is derived among the plurality of reference pictures can be explicitly encoded and signaled to the decoder.

At this time, if the reference picture list includes only one reference picture, encoding/decoding of the reference picture index may be omitted.

Prediction direction information may be an index indicating one of L0 unidirectional prediction, L1 unidirectional prediction, or bidirectional prediction. Alternatively, an L0 flag indicating whether prediction in the L0 direction is performed and an L1 flag indicating whether prediction in the L1 direction is performed may be encoded and signaled.

The motion information merge mode is a mode in which the motion information of the current block is set to be the same as motion information of a neighboring block. In the motion information merge mode, motion information can be encoded/decoded using a motion information merge list.

A motion information merge candidate may be derived based on motion information of a neighboring block or neighboring sample adjacent to the current block. For example, a reference position around the current block may be predefined, and then whether motion information is present at the predefined reference position may be checked. If motion information is present at the predefined reference position, the motion information at the position can be inserted into the motion information merge list as a motion information merge candidate.

In the example of FIG. 6, the predefined reference position may include at least one of A0, A1, B0, B1, B5, or Col. Furthermore, motion information merge candidates can be derived in the order of A1, B1, B0, A0, B5, and Col.

Among motion information merge candidates included in the motion information merge list, motion information of a motion information merge candidate with the optimal cost can be set as motion information of the current block. Furthermore, index information (e.g., merge index) indicating a motion information merge candidate selected from among the plurality of motion information merge candidates may be encoded and transmitted to the decoder.

In the decoder, a motion information merge list can be constructed in the same way as in the encoder. Then, a motion information merge candidate can be selected on the basis of a merge index decoded from a bitstream. Motion information of the selected motion information merge candidate may be set as motion information of the current block.

Unlike the motion vector prediction list, the motion information merge list is configured as a single list regardless of the prediction direction. That is, motion information merge candidates included in the motion information merge list may have only L0 motion information or L1 motion information, or may have bidirectional motion information (i.e., L0 motion information and L1 motion information).

The motion information of the current block may also be derived using a reconstructed sample area around the current block. Here, the reconstructed sample area used to derive the motion information of the current block may be called a template.

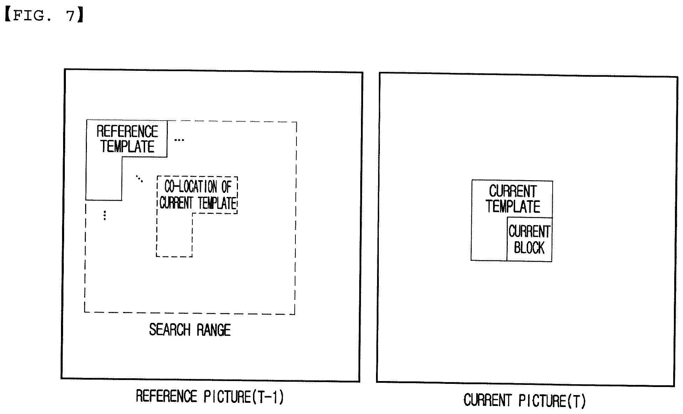

FIG. 7 is a diagram illustrating a template-based motion estimation method.

In FIG. 3, a prediction block for the current block is determined based on the cost between the current block and the reference block within the search range. According to the present embodiment, unlike the example shown in FIG. 3, motion estimation for the current block can be performed on the basis of the cost between a template neighboring the current block (hereinafter referred to as a current template) and a reference template having the same size and shape as the current template.

As an example, the cost may be calculated on the basis of the absolute sum of differences between reconstructed samples in the current template and reconstructed samples in a reference block. As the absolute sum decreases, the cost can be decreased.

Upon determination of the current template within a search range and a reference template having the optimal cost, a reference block neighboring the reference template can be set as a prediction block for the current block.

Additionally, motion information of the current block can be set on the basis of the distance between the current block and the reference block, the index of the picture to which the reference block belongs, and whether the reference picture is included in the L0 or L1 reference picture list.

Since a previously reconstructed area around the current block is defined as a template, the decoder can perform motion estimation in the same manner as the encoder. Accordingly, in a case where motion information is derived using a template, it is not necessary to encode and signal motion information other than information indicating whether the template is used.

The current template may include at least one of an area adjacent to the top of the current block or an area adjacent to the left side of the current block. Here, the area adjacent to the top may include at least one row, and the area adjacent to the left side may include at least one column.

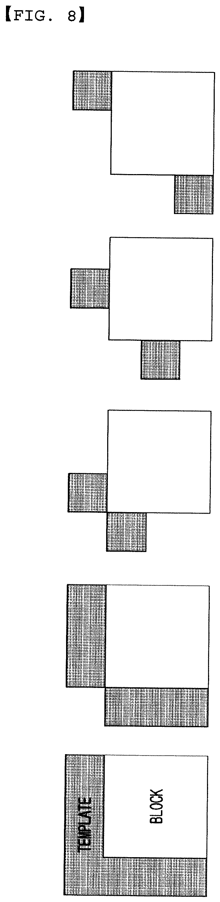

FIG. 8 shows examples of template configuration.

A current template may be constructed according to one of the examples shown in FIG. 8.

Alternatively, unlike the examples shown in FIG. 8, the template may be constructed using only the area adjacent to the left side of the current block or using only the area adjacent to the top of the current block.

The size and/or shape of the current template may be predefined in the encoder and the decoder.

Alternatively, a plurality of template candidates having different sizes and/or shapes may be predefined, and then index information for identifying one of the plurality of template candidates may be encoded and signaled to the decoder.

Alternatively, one of a plurality of template candidates may be adaptively selected on the basis of at least one of the size, shape, or position of the current block. For example, if the current block comes into contact with the upper boundary of a CTU, the current template can be constructed using only the area adjacent to the left side of the current block.

Template-based motion estimation can be performed on each reference picture stored in the reference picture list. Alternatively, motion estimation may be performed on only some reference pictures. As an example, motion estimation may be performed only on a reference picture with a reference picture index of 0, or motion estimation may be performed only on reference pictures having reference picture indices less than a threshold value or reference pictures whose POC differences from the current picture are less than a threshold value.

Alternatively, a reference picture index may be explicitly encoded and signaled, and then motion estimation may be performed only on the reference picture indicated by the reference picture index.

Alternatively, motion estimation may be performed on a reference picture of a neighboring block corresponding to the current template. For example, if the template is composed of a left neighboring area and a top neighboring area, at least one reference picture can be selected using at least one of the reference picture index of the left neighboring block or the reference picture index of the top neighboring block. Thereafter, motion estimation can be performed on at least one selected reference picture.

Information indicating whether template-based motion estimation has been applied may be encoded and signaled to the decoder. The information may be a 1-bit flag. For example, if the flag is true (1), it indicates that template-based motion estimation has been applied to the L0 direction and L1 direction of the current block. On the other hand, if the flag is false (0), it indicates that template-based motion estimation has not been applied. In this case, motion information of the current block may be derived on the basis of the motion information merge mode or the motion vector prediction mode.

On the other hand, template-based motion estimation can be applied only in a case where it is determined that the motion information merge mode and motion vector prediction mode have not been applied to the current block. For example, when a first flag indicating whether the motion information merge mode has been applied and a second flag indicating whether the motion vector prediction mode has been applied are both 0, template-based motion estimation can be performed.

For each of the L0 direction and the L1 direction, information indicating whether template-based motion estimation has been applied may be signaled. That is, whether template-based motion estimation is applied to the L0 direction and whether template-based motion estimation is applied to the L1 direction may be determined independently of each other. Accordingly, template-based motion estimation can be applied to one of the L0 direction and the L1 direction, whereas another mode (e.g., the motion information merge mode or the motion vector prediction mode) can be applied to the other direction.

When template-based motion estimation is applied to both the L0 direction and the L1 direction, a prediction block for the current block may be generated on the basis of a weighted sum operation of an L0 prediction block and an L1 prediction block. Alternatively, even when template-based motion estimation is applied to one of the L0 direction and the L1 direction but another mode is applied to the other, a prediction block for the current block may be generated on the basis of a weighted sum operation of the L0 prediction block and the L1 prediction block. This will be described later using Equation 2.

Alternatively, a template-based motion estimation method may be inserted as a motion information merge candidate in the motion information merge mode or a motion vector prediction candidate in the motion vector prediction mode. In this case, whether to apply the template-based motion estimation method may be determined on the basis of whether a selected motion information merge candidate or a selected motion vector prediction candidate indicates the template-based motion estimation method.

Motion information of the current block may also be generated on the basis of a bidirectional matching method.

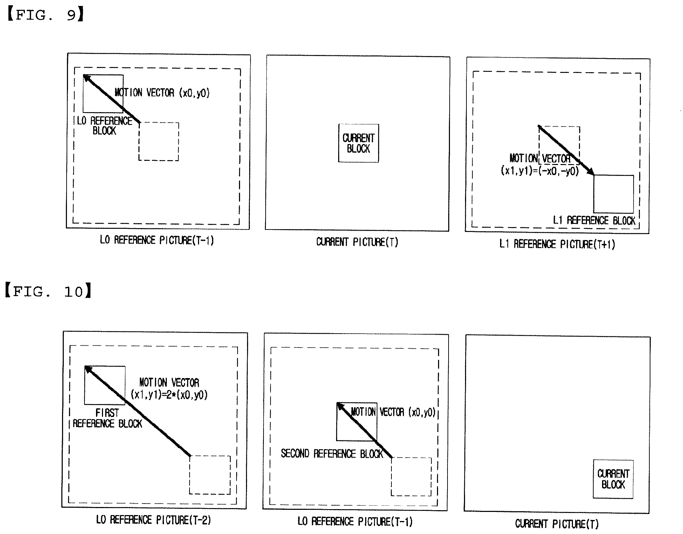

FIG. 9 is a diagram illustrating a motion estimation method based on a bidirectional matching method.

The bidirectional matching method can be performed only when the temporal order (i.e., POC) of the current picture is present between the temporal order of an L0 reference picture and the temporal order of an L1 reference picture.

When the bidirectional matching method is applied, a search range can be set for each of the L0 reference picture and the L1 reference picture. At this time, the L0 reference picture index for identifying the L0 reference picture and the L1 reference picture index for identifying the L1 reference picture may be encoded and signaled.

As another example, only the L0 reference picture index may be encoded and signaled, and an L1 reference picture may be selected on the basis of the distance between the current picture and the L0 reference picture (hereinafter referred to as an L0 POC difference). As an example, among L1 reference pictures included in the L1 reference picture list, an L1 reference picture for which the absolute value of the distance from the current picture (hereinafter referred to as an L1 POC difference) is the same as the absolute value of the distance between the current picture and the L0 reference picture may be selected. If there is no L1 reference picture having the same L1 POC difference as the L0 POC difference, an L1 reference picture having an L1 POC difference most similar to the L0 POC difference may be selected from among the L1 reference pictures.

Here, among the L1 reference pictures, only an L1 reference picture having a different temporal direction from the L0 reference picture can be used for bidirectional matching. For example, if the POC of the L0 reference picture is smaller than that of the current picture, one of L1 reference pictures having POCs greater than that of the current picture can be selected.

On the other hand, only the L1 reference picture index may be encoded and signaled, and an L0 reference picture may be selected on the basis of the distance between the current picture and the L1 reference picture.

Alternatively, the bidirectional matching method may be performed using an L0 reference picture closest in distance to the current picture among L0 reference pictures and an L1 reference picture closest in distance to the current picture among L0 reference pictures.

Alternatively, the bidirectional matching method may also be performed using an L0 reference picture to which a predefined index (e.g., index 0) is assigned in the L0 reference picture list and an L1 reference picture to which a predefined index (e.g., index 0) is assigned in the L1 reference picture list.

Alternatively, an LX (X being 0 or 1) reference picture may be selected based on an explicitly signaled reference picture index, and a reference picture closest to the current picture among L|X-1| reference pictures, or a reference picture having a predefined index in an L|X-1| reference picture list may be selected as an L|X-1| reference picture.

As another example, an L0 reference picture and/or an L1 reference picture may be selected on the basis of motion information of a neighboring block of the current block. As an example, an L0 reference picture and/or an L1 reference picture to be used for bidirectional matching may be selected using the reference picture index of the left or top neighboring block of the current block.

A search range may be set within a predetermined range from a co-located block in a reference picture.

As another example, the search range may be set on the basis of initial motion information. The initial motion information may be derived from a neighboring block of the current block. For example, motion information of the left neighboring block or the top neighboring block of the current block may be set as the initial motion information of the current block.

In a case where the bidirectional matching method is applied, an L0 motion vector and an L1 motion vector are set in opposite directions. This indicates that the L0 motion vector and the L1 motion vector have opposite signs. In addition, the size of an LX motion vector may be proportional to the distance (i.e., POC difference) between the current picture and an LX reference picture.

Thereafter, motion estimation can be performed using a cost between a reference block within the search range of L0 reference pictures (hereinafter referred to as an L0 reference block) and a reference block within the search range of L1 reference pictures (hereinafter referred to as an L1 reference block).

If an L0 reference block for which a vector with respect to the current block is (x, y) is selected, an L1 reference block located at a distance of (-Dx, -Dy) from the current block can be selected. Here, D can be determined by the ratio of the distance between the current picture and the L0 reference picture to the distance between the L1 reference picture and the current picture.

For example, in the example shown in FIG. 9, the absolute value of the distance between the current picture T and the L0 reference picture T-1 is the same as absolute value of the distance between the current picture T and the L1 reference picture T+1. Accordingly, in the illustrated example, the L0 motion vector (x0, y0) and the L1 motion vector (x1, y1) have the same size but opposite directions. If an L1 reference picture with a POC of (T+2) has been used, the L1 motion vector (x1, y1) is set to (-2*x0, -2*y0).

Upon selection of an L0 reference block and an L1 reference block with an optimal cost, the L0 reference block and the L1 reference block can be set as an L0 prediction block and an L1 prediction block for the current block. Thereafter, the final prediction block for the current block can be generated through a weighted sum operation of the L0 reference block and the L1 reference block. As an example, a prediction block for the current block may be generated according to Equation 2 which will be described later.

When the bidirectional matching method is applied, the decoder can perform motion estimation in the same way as the encoder. Accordingly, information indicating whether the bidirectional motion matching method is applied is explicitly encoded/decoded, while encoding/decoding of motion information such as motion vectors can be omitted. As described above, at least one of the L0 reference picture index or the L1 reference picture index may be explicitly encoded/decoded.

As another example, information indicating whether the bidirectional matching method has been applied may be explicitly encoded/decoded, and when the bidirectional matching method has been applied, the L0 motion vector or the L1 motion vector may be explicitly encoded and signaled. In a case where the L0 motion vector has been signaled, the L1 motion vector can be derived on the basis of the POC difference between the current picture and the L0 reference picture and the POC difference between the current picture and the L1 reference picture. In a case where the L1 motion vector has been signaled, the L0 motion vector can be derived on the basis of the POC difference between the current picture and the L0 reference picture and the POC difference between the current picture and the L1 reference picture. At this time, the encoder can explicitly encode the smaller one of the L0 motion vector and the L1 motion vector.

The information indicating whether the bidirectional matching method has been applied may be a 1-bit flag. As an example, if the flag is true (e.g., 1), it can indicate that the bidirectional matching method has been applied to the current block. If the flag is false (e.g., 0), it can indicate that the bidirectional matching method has not been applied to the current block. In this case, the motion information merge mode or the motion vector prediction mode may be applied to the current block.

On the other hand, the bidirectional matching method can be applied only in a case where it is determined that the motion information merge mode and the motion vector prediction mode are not applied to the current block. For example, when the first flag indicating whether the motion information merge mode is applied and the second flag indicating whether the motion vector prediction mode is applied are both 0, the bidirectional matching method can be applied.

Alternatively, the bidirectional matching method may be inserted as a motion information merge candidate in the motion information merge mode or a motion vector prediction candidate in the motion vector prediction mode. In this case, whether to apply the bidirectional matching method may be determined on the basis of whether a selected motion information merge candidate or a selected motion vector prediction candidate indicates the bidirectional matching method.

An example in which the temporal order of the current picture needs to be present between the temporal order of the L0 reference picture and the temporal order of the L1 reference picture in the bidirectional matching method has been described. It is also possible to generate a prediction block for the current block by using a unidirectional matching method to which the above constraints of the bidirectional matching method are not applied. Specifically, in the unidirectional matching method, two reference pictures having a temporal order (i.e., POC) smaller than that of the current block or two reference pictures having a temporal order greater than that of the current block can be used. Here, both the two reference pictures may be derived from the L0 reference picture list or the L1 reference picture list. Alternatively, one of the two reference pictures may be derived from the L0 reference picture list, and the other may be derived from the L1 reference picture list.

FIG. 10 is a diagram illustrating a motion estimation method based on the unidirectional matching method.

The unidirectional matching method can be performed based on two reference pictures (i.e., forward reference pictures) having a POC smaller than that of the current picture or two reference pictures (i.e., backward reference pictures) having a POC larger than that of the current picture. FIG. 10 illustrates that motion estimation based on the unidirectional matching method is performed on the basis of a first reference picture T-1 and a second reference picture T-2 having POCs smaller than that of the current picture T.

Here, the first reference picture index for identifying the first reference picture and the second reference picture index for identifying the second reference picture may be encoded and signaled. Among the two reference pictures used for the unidirectional matching method, a reference picture having a smaller POC difference from the current picture can be set as the first reference picture. Accordingly, when the first reference picture is selected, only a reference picture having a larger POC difference from the current picture than the first reference picture can be set as the second reference picture. The second reference picture index can be set such that it indicates one of rearranged reference pictures that have the same temporal direction as the first reference picture and have larger POC differences from the current picture than the first reference picture.

On the other hand, a reference picture having a larger POC difference from the current picture among the two reference pictures may be set as the first reference picture. In this case, the second reference picture index can be set such that it indicates one of rearranged reference pictures that have the same temporal direction as the first reference picture and have smaller POC differences from the current picture than the first reference picture.

Alternatively, the unidirectional matching method may be performed using a reference picture to which a predefined index in the reference picture list is assigned and a reference picture having the same temporal direction as this reference picture. As an example, a reference picture with an index of 0 in the reference picture list may be set as the first reference picture, and a reference picture with the smallest index among reference pictures having the same temporal direction as the first reference picture in the reference picture list may be selected as the second reference picture.

Both the first reference picture and the second reference picture can be selected from the L0 reference picture list or the L1 reference picture list. FIG. 10 illustrates that two L0 reference pictures are used for the unidirectional matching method. Alternatively, the first reference picture may be selected from the L0 reference picture list and the second reference picture may be selected from the L1 reference picture list.

Information indicating whether the first reference picture and/or the second reference picture belong to the L0 reference picture list or the L1 reference picture list may be additionally encoded/decoded.

Alternatively, unidirectional matching may be performed using one of the L0 reference picture list and the L1 reference picture list, which is set as default. Alternatively, two reference pictures may be selected from the L0 reference picture list and the L1 reference picture list, whichever has a larger number of reference pictures.

Thereafter, search ranges within the first reference picture and the second reference picture can be set.

The search ranges can be set within a predetermined range from the co-located block in the reference pictures.

As another example, the search ranges can be set on the basis of initial motion information. The initial motion information may be derived from a neighboring block of the current block. For example, motion information of the left neighboring block or the top neighboring block of the current block may be set as the initial motion information of the current block.

Thereafter, motion estimation can be performed using the cost between the first reference block within the search range of the first reference picture and the second reference block within the search range of the second reference picture.

At this time, in the unidirectional matching method, the size of a motion vector needs to be set to increase in proportion to the distance between the current picture and a reference picture. Specifically, in a case where the first reference block for which a vector with respect to the current picture is (x, y) is selected, the second reference block needs to be spaced apart from the current block by (Dx, Dy). Here, D can be determined by the ratio of the distance between the current picture and the first reference picture to the distance between the current picture and the second reference picture.

For example, in the example of FIG. 10, the distance (i.e., POC difference) between the current picture and the first reference picture is 1 and the distance (i.e., POC difference) between the current picture and the second reference picture is 2. Accordingly, when the first motion vector for the first reference block in the first reference picture is (x0, y0), the second motion vector (x1, y1) for the second reference block in the second reference picture can be set to (2x0, 2y0).

When the first reference block and the second reference block with the optimal cost are selected, the first reference block and the second reference block can be set as first and second prediction blocks for the current block. Thereafter, the final prediction block for the current block can be generated through a weighted sum operation of the first prediction block and the second prediction block. As an example, a prediction block for the current block can be generated according to Equation 2 which will be described later.

In a case where the unidirectional matching method is applied, the decoder can perform motion estimation in the same way as the encoder. Accordingly, information indicating whether the unidirectional motion matching method is applied is explicitly encoded/decoded, while encoding/decoding of motion information such as motion vectors can be omitted. As described above, at least one of the first reference picture index or the second reference picture index may be explicitly encoded/decoded.

As another example, information indicating whether the unidirectional matching method has been applied may be explicitly encoded/decoded, and in a case where the unidirectional matching method has been applied, the first motion vector or the second motion vector may be explicitly encoded and signaled. In a case where the first motion vector has been signaled, the second motion vector may be derived on the basis of the POC difference between the current picture and the first reference picture and the POC difference between the current picture and the second reference picture. In a case where the second motion vector has been signaled, the first motion vector may be derived on the basis of the POC difference between the current picture and the first reference picture and the POC difference between the current picture and the second reference picture. At this time, the encoder can explicitly encode the smaller one of the first motion vector and the second motion vector.

The information indicating whether the unidirectional matching method has been applied may be a 1-bit flag. As an example, if the flag is true (e.g., 1), it can indicate that the unidirectional matching method is applied to the current block. If the flag is false (e.g., 0), it can indicate that the unidirectional matching method is not applied to the current block. In this case, the motion information merge mode or the motion vector prediction mode can be applied to the current block.

On the other hand, the unidirectional matching method may be applied only in a case where it is determined that the motion information merge mode and the motion vector prediction mode are not applied to the current block. For example, when the first flag indicating whether the motion information merge mode is applied and the second flag indicating whether the motion vector prediction mode is applied are both 0, the unidirectional matching method can be applied.

Alternatively, the unidirectional matching method may be inserted as a motion information merge candidate in motion information merge mode or a motion vector prediction candidate in motion vector prediction mode. In this case, whether to apply the unidirectional matching method may be determined based on whether the selected motion information merge candidate or the selected motion vector prediction candidate indicates the unidirectional matching method.

Intra-prediction is a method of obtaining a prediction block for the current block using reference samples having spatial similarity to the current block. Reference samples used for intra-prediction may be reconstructed samples. As an example, a previously reconstructed sample around the current block may be set as a reference sample. Alternatively, in a case where it is determined that a reconstructed sample at a specific position is unavailable, an adjacent reconstructed sample may be set as a reference sample at a specific position.

Unlike what has been described, an original sample may also be set as a reference sample.

As in the above-mentioned example, a method of performing motion estimation in the decoder in the same manner as that in the encoder, that is, at least one of the template-based motion estimation method, the bidirectional estimation method, or the unidirectional estimation method, may be defined as an inter-prediction mode. Here, in a case where a plurality of decoder-side motion estimation methods is defined as an inter-prediction mode, an index indicating one of the plurality of decoder-side motion estimation methods may be encoded and signaled along with a flag indicating whether a decoder-side motion estimation method is applied. As an example, an index indicating at least one of the template-based motion estimation method, the bidirectional estimation method, or the unidirectional estimation method may be encoded and signaled.

Intra-prediction may be performed based on at least one of a plurality of intra-prediction modes predefined in the encoder and decoder.

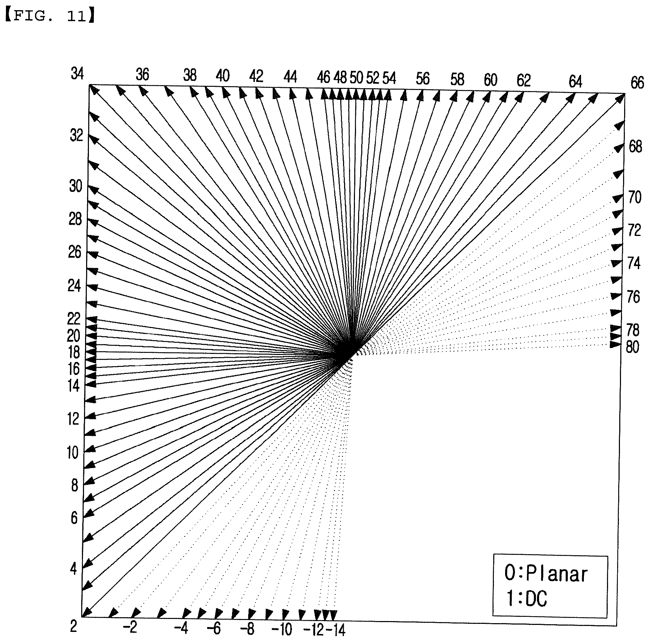

FIG. 11 shows predefined intra-prediction modes.

The intra-prediction modes predefined in the encoder and decoder may include non-directional intra-prediction modes and directional prediction modes. For example, in the example shown in FIG. 11, mode 0 represents a planar mode, which is a non-directional mode, and mode 1 represents a DC mode, which is a non-directional mode. Additionally, FIG. 11 illustrates 65 directional intra-prediction modes 2 to 66.

More or fewer intra-prediction modes than illustrated may be predefined in the encoder and decoder.

One of the predefined intra-prediction modes can be selected, and a prediction block for the current block can be obtained based on the selected intra-prediction mode. At this time, the number and positions of reference samples used to generate prediction samples within the prediction block may be adaptively determined according to the selected intra-prediction mode.

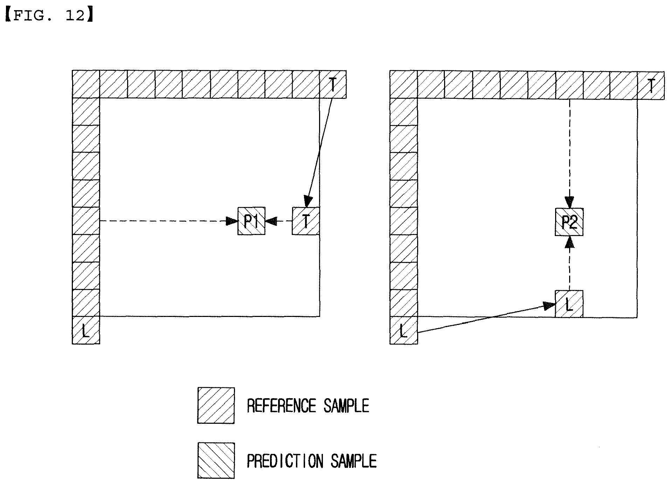

FIG. 12 shows an example in which a prediction sample is generated in the planar mode.

In the example shown in FIG. 12, when a prediction block is generated in the planar mode, a reference sample T adjacent to the upper right corner of the current block and a reference sample L adjacent to the lower left corner of the current block may be used.

P1 represents a prediction sample in the horizontal direction, and P2 represents a prediction sample in the vertical direction. P1 can be generated by linearly interpolating a reference sample having the same y coordinate as P1 (i.e., a reference sample located in the horizontal direction of P1) and the reference sample T. P2 can be generated by linearly interpolating the reference sample L and a reference sample having the same x coordinate as P2 (i.e., a reference sample located in the vertical direction of P2).

Thereafter, the final prediction sample can be obtained through a weighted sum operation of the horizontal prediction sample P1 and the vertical prediction sample P2. Equation 1 represents an example of generating the final prediction sample.

**[Equation 1]**

$$(\alpha \times P1 + \beta \times P2)/(\alpha + \beta)$$

In equation 1, $\alpha$ indicates a weight assigned to the horizontal prediction sample P1 and $\beta$ indicates a weight assigned to the vertical prediction sample P2. The weights $\alpha$ and $\beta$ can be determined based on the width and height of the current block. Depending on the width and height of the current block, the weights $\alpha$ and $\beta$ may have the same value or different values. For example, if one side of the block is longer than the other side, the weight assigned to the prediction sample in the direction parallel to the long side can be set to have a larger value. Alternatively, on the other hand, the weight assigned to the prediction sample in the direction parallel to the long side may be set to have a smaller value.

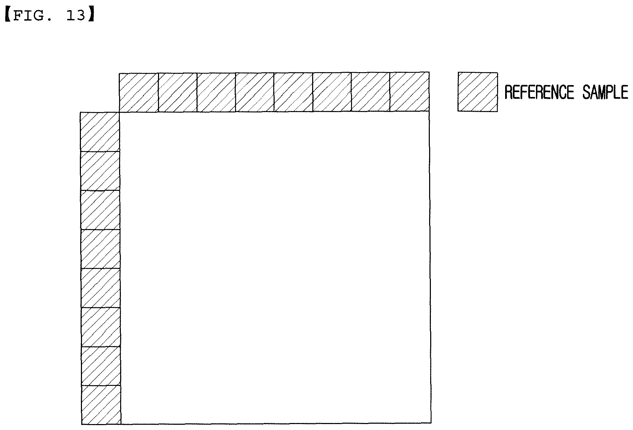

FIG. 13 shows an example in which a prediction sample is generated in the DC mode.

In the DC mode, the average value of reference samples surrounding the current block can be calculated. FIG. 13 shows a range of reference samples used to calculate the average value. As in the example shown in FIG. 13, the average value can be calculated based on upper reference samples and left reference samples.

Depending on the type of the current block, the average value may be calculated using only the upper reference samples or only the left reference samples. For example, if the width of the current block is greater than the height, or if the ratio between the width and height of the current block is equal to or greater than (or less than) a predefined value, the average value can be calculated using only the upper reference samples.

On the other hand, if the width of the current block is smaller than the height, or if the ratio between the width and the height of the current block is less than (or greater than) a predefined value, the average value can be calculated using only the left reference samples.

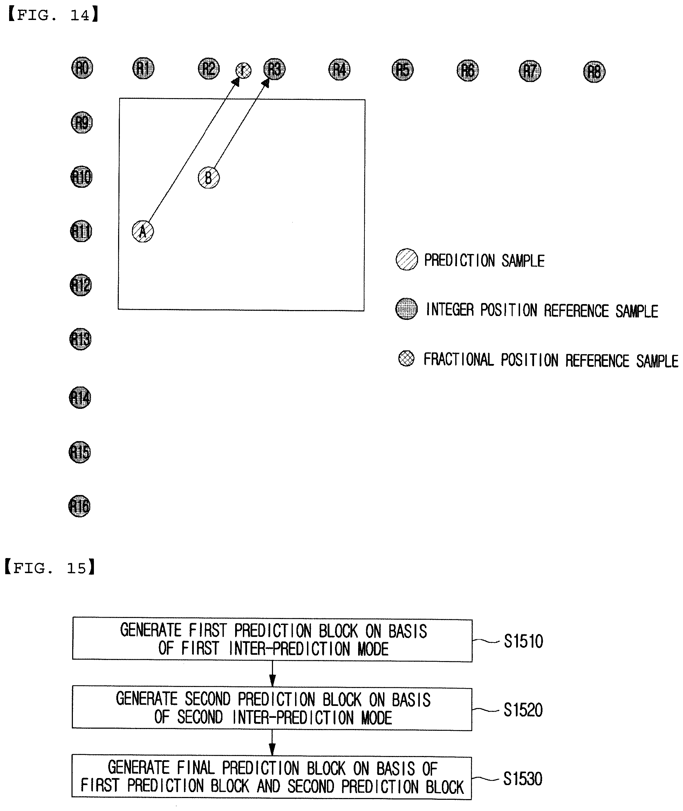

FIG. 14 shows an example in which a prediction sample is generated in the directional intra-prediction mode.

In a case where the directional intra-prediction mode is applied to the current block, projection can be performed at each sample position in the current block in the direction in which a reference sample is located according to the angle of the directional intra-prediction mode.

If a reference sample is present at the projected position (that is, if the projected position is an integer position of a reference sample), the reference sample at the corresponding position can be set as a prediction sample.

On the other hand, if there is no reference sample at the projected position (i.e., if the projected position is a fractional position of a reference sample), reference samples around the projected position can be interpolated and the interpolated value can be set as a prediction sample.

For example, in the example shown in FIG. 14, when projection based on the angle of the directional intra-prediction mode is performed at the position of a sample B in the current block, a reference sample R3 is present at the projected position. Accordingly, the reference sample R3 can be set as a prediction sample for the position of the sample B.

On the other hand, when projection based on the angle of the directional intra-prediction mode is performed at the position of a sample A in the current block, there is no reference sample at the projected position. In this case, integer position reference samples present around the projected position can be interpolated, and the interpolated value can be set as a prediction sample for the position of the sample A. Here, the value generated by interpolating integer position reference samples may be called a fractional position reference sample (r in FIG. 14).

As described above, a prediction block for the current block may be generated through inter-prediction or intra-prediction. At this time, inter-prediction may be performed based on at least one of a plurality of inter-prediction modes, and the plurality of inter-prediction modes include at least one of the motion vector merge mode, the motion vector prediction mode, the template-based motion estimation method, the bidirectional matching method, or the unidirectional matching method.

In the following embodiments, among the inter-prediction modes, an inter-prediction mode (i.e., the template-based motion estimation method, bidirectional matching method and/or unidirectional matching method) in which the decoder performs motion estimation in the same manner as the encoder to generate a prediction block will be referred to as a decoder-side motion estimation mode for convenience of description. In addition, among the inter-prediction modes, an inter-prediction mode (i.e., the motion information merge mode and/or motion vector prediction mode) in which information generated by motion estimation in the encoder is explicitly encoded and signaled will be referred to as a motion information signaling mode.

According to an embodiment of the present disclosure, a prediction block for the current block can be generated by combining two or more inter-prediction methods. As an example, a plurality of prediction blocks may be generated on the basis of the plurality of inter-prediction methods, and then a final prediction block for the current block may be generated on the basis of the plurality of prediction blocks.

The above inter-prediction method may be called a combined prediction method.

For convenience of description, it is assumed that the number of prediction blocks used to generate the final prediction block is two in an example which will be described later.

Information indicating whether a combined prediction method is applied may be explicitly encoded and signaled. The information may be a 1-bit flag.

At the time of combining two different inter-prediction modes, information for identifying each of the two inter-prediction modes may be additionally encoded/decoded. As an example, two or more of a flag indicating whether template-based motion estimation is applied, a flag indicating whether the bidirectional matching method is applied, a flag indicating whether the unidirectional matching method is applied, and a flag indicating whether a motion information merge mode is applied may be encoded and signaled.

Alternatively, a plurality of combination candidates formed by combining two of the inter-prediction modes may be predefined, and an index for identifying one of the plurality of combination candidates may be encoded and signaled.

Hereinafter, a combined prediction method will be described in detail.

FIG. 15 is a flowchart showing a method of deriving a prediction block for the current block using a combined prediction method.

First, a first inter-prediction mode can be applied to the current block to generate a first prediction block (S1510). Here, the first inter-prediction mode may be any one of the motion vector merge mode, the motion vector prediction mode, the template-based motion estimation method, the bidirectional matching method, or the unidirectional matching method.

A second inter-prediction mode can be applied to the current block to generate a second prediction block (S1520). Here, the second inter-prediction mode may be any one of the motion vector merge mode, the motion vector prediction mode, the template-based motion estimation method, the bidirectional matching method, and the unidirectional matching method, which is different from the first inter-prediction mode.

Alternatively, one of the first inter-prediction mode and the second inter-prediction mode may be forced to be set as the decoder-side motion estimation mode, and the other may be forced to be set as the motion information signaling mode.

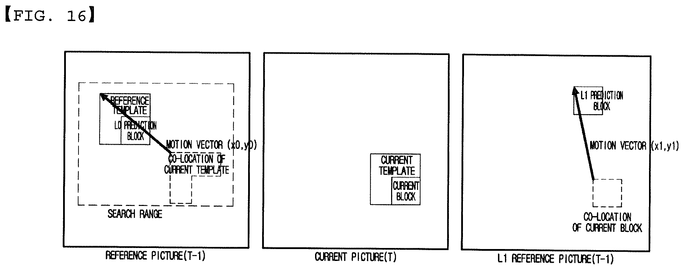

FIG. 16 shows an example in which a plurality of prediction blocks is generated through a combined prediction method.

The example shown in FIG. 16 illustrates that the template-based motion estimation method is applied in the L0 direction, and a general motion estimation method of searching for a reference block similar to the current block is applied in the L1 direction.

Specifically, the template-based motion estimation method can be applied in the L0 direction to generate the first prediction block (i.e., L0 prediction block) for the current block. Specifically, the current template and a reference template with the lowest cost within the search range of the L0 reference picture can be searched. Upon determination of the reference template with the lowest cost, the distance between the current template and the reference template can be set as a motion vector for the L0 direction.

Additionally, a reference block neighboring the reference template can be set as the first prediction block (i.e., L0 prediction block) for the current block.

A general motion estimation method can be applied in the L1 direction to generate a second prediction block (i.e., L1 prediction block) for the current block. Specifically, the current block and a reference block with the lowest cost within the search range of the L1 reference picture can be searched for. Upon determination of the reference block with the lowest cost, the distance between the current block and the reference template can be set as a motion vector for the L1 direction.

Additionally, the reference block can be set as the second prediction block (i.e., L1 prediction block) for the current block.

In a case where the template-based motion estimation method is applied, information indicating that the template-based motion estimation method has been applied is signaled, and motion information (e.g., a motion vector) need not be additionally signaled. That is, for the L0 direction, it is sufficient to encode and signal the information indicating that the template-based motion estimation method has been applied. The decoder can determine whether the template-based motion estimation method has been applied on the basis of the information. In a case where it is determined that the template-based motion estimation method has been applied, the decoder can generate the motion vector and/or the first prediction block through the template-based motion estimation method in the same manner as the encoder.

That is, the decoder can set the template-based motion estimation method as the first inter-prediction mode, and perform template-based motion estimation to generate the first prediction block.

On the other hand, in a case where a general motion estimation method is applied, information generated based on the motion vector merge mode or the motion vector prediction mode needs to be explicitly encoded and signaled.

Accordingly, the decoder can set the motion information merge mode or the motion vector prediction mode as the second inter-prediction mode and generates the second prediction block on the basis of motion information derived based on information parsed from a bitstream. For example, if the second inter-prediction mode is the motion information merge mode, motion information can be derived based on a motion information merge index parsed from the bitstream.

Alternatively, if the second inter-prediction mode is the motion vector prediction mode, motion information can be derived based on a motion vector prediction flag and a motion vector difference parsed from the bitstream.

As in the example shown in FIG. 16, a combined prediction method can be performed by applying different inter-prediction modes to the L0 inter-prediction and the L1 inter-prediction.

As another example, bidirectional prediction (i.e., L0 and L1 prediction) may be performed in the first inter-prediction mode, and unidirectional prediction (i.e., L0 or L1 prediction) may be performed in the second inter-prediction mode. On the other hand, unidirectional prediction may be performed in the first inter-prediction mode, and bidirectional prediction may be performed in the second inter-prediction mode.

Alternatively, bidirectional prediction may be performed in both the first inter-prediction mode and the second inter-prediction mode.

Alternatively, the prediction direction of the second inter-prediction mode may be set depending on the prediction direction of the first inter-prediction mode. For example, when the first inter-prediction mode is applied to L0 direction prediction, the second inter-prediction mode may be set to be applied to L1 direction prediction or bidirectional prediction.

Alternatively, regardless of the prediction direction, the first inter-prediction mode and the second inter-prediction mode may be selected.

In the example shown in FIG. 16, the L0 reference picture is a forward reference picture with a POC smaller than the current picture, and the L1 reference picture is a backward reference picture with a POC larger than the current picture. As in the illustrated example, the first inter-prediction mode may be forced to be performed using a forward reference picture, and the second inter-prediction mode may be forced to be performed using a backward reference picture.

As another example, unlike the illustrated example, forward reference pictures may be used in both the L0 direction and L1 direction, or backward reference pictures may be used in both the L0 and L1 directions.

When the first prediction block and the second prediction block are generated, the final prediction block for the current block can be generated through a weighted sum operation of the first prediction block and the second prediction block (S1530).

The following equation 2 represents an example of generating the final prediction block for the current block through a weighted sum operation.

$$[\text{Equation 2}]$$
$$P[x,y] = P0[x,y] * w0 + P1[x,y] * (1-w0),$$
$$0 \leq x < W\text{-}1, 0 \leq y < H\text{-}1$$

In equation 2, P indicates the final prediction block for the current block, and P0 and P1 indicate the first prediction block and the second prediction block, respectively. In addition, [x, y] represents the coordinates of a sample in the current block. Additionally, W represents the width of the current block, and H represents the height of the current block.

In the above example, a weight applied to the first prediction block P0 is w0, and a weight applied to the second prediction block P1 is 1-w0. The weight 1-w0 may be applied to the first prediction block P0, and the weight w0 may be applied to the second prediction block P1.

In the weighted sum operation, the same weight may be assigned to P0 and P1. That is, by setting w0 to 1/2, the average value of P0 and P1 can be set as the final prediction block.

As another example, the weight assigned to each prediction block may be adaptively set depending on the inter-prediction mode used to generate each prediction block. As an example, the weight assigned to a prediction block generated in the decoder-side motion estimation mode may be set to a larger value than the weight assigned to a prediction block generated in the motion information signaling mode. In FIG. 16, the first prediction block (i.e., L0 prediction block) is generated by the template-based motion estimation method, whereas the second prediction block (i.e., L1 prediction block) is generated by the motion information merge mode or motion vector prediction mode. Accordingly, the weight assigned to the first prediction block may have a larger value than the weight assigned to the second prediction block.

As another example, the weight may be determined based on the POC of the first reference picture used to generate the first prediction block and the POC of the second reference picture used to generate the second prediction block. As an example, the weight w0 may be determined based on the ratio between the absolute value of the POC difference between the first reference picture and the current picture and the absolute value of the POC difference between the second reference picture and the current picture. A higher weight may be assigned to a prediction block derived from a reference picture having a smaller absolute value of the POC difference from the current picture among the first and second reference pictures.

As another example, the weight applied to each prediction block can be determined based on a predefined weight table. Here, the weight table may be a lookup table in which different indices are assigned to weight candidates that can be set as the weight wO.

As an example, a lookup table in which different indices are assigned to five weight candidates may be previously stored in the encoder and decoder. For example, a weight table [4/8, 5/8, 3/8, 10/8, -2/8] including five weight candidates to which indices 0 to 4 are assigned according to the listed order may be predefined. In the lookup tables, index information for identifying a candidate value having the same value as wO may be explicitly encoded and signaled.

In order to perform integer operation-based processing, it is also possible to scale up the candidate values in the weight table by N times and then perform a weighted sum operation on the first prediction block P0 and the second prediction block P1. In this case, normalization needs to be performed by scaling down the weighted sum result based on N.

The number of weight candidates and/or the values of the weight candidates included in the weight table may be adaptively determined on the basis of at least one of the inter-prediction mode, the size of the current block, the shape of the current block, the temporal direction of reference picture(s), or the temporal order of the reference picture(s).

For example, in a case where the first prediction block is generated based on the decoder-side motion estimation mode, the weight w0 can be selected from N weight candidates. On the other hand, in a case where the first prediction block is generated based on the motion information signaling mode, the weight w0 can be selected from M weight candidates. Here, M may be a natural number different from N.

In the above example, a combined prediction method is applied by combining the first inter-prediction mode and the second inter-prediction mode different from the first inter-prediction mode. Unlike the example, the final prediction block for the current block may be generated by generating two prediction blocks on the basis of one inter-prediction mode.

For example, in the example shown in FIG. 16, the same inter-prediction mode can be applied to both the L0 direction and the L1 direction. Specifically, the template-based motion estimation method can be applied to both the L0 direction and the L1 direction. To this end, for each of the L0 direction and the L1 direction, information (e.g., a flag) indicating whether the template-based motion estimation method is applied may be explicitly encoded and signaled.

Alternatively, two prediction blocks may be generated by applying the template-based motion estimation method to each of two forward reference pictures or two backward reference pictures.

Alternatively, two prediction blocks may be generated by selecting a plurality of motion information merge candidates from a motion information merge list. As an example, a first prediction block may be derived based on first motion information derived from a first motion information merge candidate, and a second prediction block may be derived based on second motion information derived from a second motion information merge candidate.

As described above, in a case where the decoder-side motion estimation mode is included in the motion information merge list as one of motion information merge candidates, at least one of the first motion information merge candidate or the second motion information merge candidate may be forced to indicate a motion information merge candidate corresponding to the decoder-side motion estimation mode.

In a case where bidirectional prediction is performed through the first inter-prediction mode and unidirectional prediction is performed through the second prediction mode, a total of three prediction blocks can be generated for the current block. For example, in a case where the first inter-prediction mode is the motion information merge mode and motion information derived based on the motion information merge list has bidirectional motion information, an L0 prediction block and an L1 prediction block can be generated using the motion information. In a case where the second inter-prediction mode is the template-based motion estimation method, and the template-based motion estimation method is applied only to the L0 direction, one L0 prediction block can be generated. In this case, for the current block, three prediction blocks (i.e., two L0 prediction blocks and one L1 prediction block) can be generated.

In this case, the prediction block generated by performing a weighted sum operation (or averaging operation) on an L0 prediction block and an L1 prediction block generated based on the first inter-prediction mode may be set as a first prediction block, an L0 prediction block generated based on the second inter-prediction mode may be set as a second prediction block, and then the final prediction block for the current block may be generated through equation 2. Alternatively, the prediction block generated by performing a weighted sum operation (or averaging operation) on two L0 prediction blocks may be set as the first prediction block, one L1 prediction block may be set as the second prediction block, and then the final prediction block for the current block may be generated through equation 2.

Even when each of the first inter-prediction mode and the second inter-prediction mode is applied to bidirectional prediction, the final prediction block for the current block can be generated in the same manner as above. For example, if the first inter-prediction mode is the motion information merge mode and motion information derived based on the motion information merge list has bidirectional motion information, an L0 prediction block and an L1 prediction block can be generated using the motion information. If the second inter-prediction mode is the template-based motion estimation method, and the template-based motion estimation method is applied to each of the L0 direction and the L1 direction, an L0 prediction block and an L1 prediction block can be generated. In this case, for the current block, four prediction blocks (i.e., two L0 prediction blocks and two L1 prediction blocks) may be generated.

In this case, the prediction block generated by performing a weighted sum operation (or averaging operation) on an L0 prediction block and an L1 prediction block generated based on the first inter-prediction mode may be set as a first prediction block, and the prediction block generated by performing a weighted sum operation (or averaging operation) on an L0 prediction block and an L1 prediction block generated based on the second inter-prediction mode may be set as a second prediction block. Alternatively, the prediction block generated by performing a weighted sum operation (or averaging operation) on an L0 prediction block generated based on the first inter-prediction mode and an L0 prediction block generated based on the second inter-prediction mode may be set as the first prediction block, and the prediction block generated by performing a weighted sum operation (or averaging operation) on an L1 prediction block generated based on the first inter-prediction mode and an L1 prediction block generated based on the second inter-prediction mode may be set as the second prediction block.

Alternatively, a combined prediction method may be performed using three or more inter-prediction modes. In this case, three or more prediction blocks can be generated for the current block, and the final prediction block for the current block can be generated by performing a weighted sum operation on three prediction blocks. At this time, each of the three prediction blocks may be generated based on the decoder-side motion estimation mode or the motion information signaling mode.

In this case, the result of a weighted sum (or averaging) operation performed on L0 prediction blocks can be set as the first prediction block, and the result of a weighted sum (or averaging) operation performed on L1 prediction blocks can be set as the second prediction block. Alternatively, the result of a weighted sum (or averaging) operation performed on prediction blocks derived based on the decoder-side motion estimation mode among a plurality of prediction blocks may be set as the first prediction block, and the result of a weighted sum (or averaging) operation performed on prediction blocks derived based on the motion information signaling mode may be set as the second prediction block.

As another example, in a case where three or more prediction blocks are generated for the current block, the final prediction block for the current block may be derived based on a weighted sum operation of the three or more prediction blocks. At this time, the weight applied to each prediction block may be determined based on a predefined weight table. To this end, information for identifying one of weight candidates included in the weight table may be explicitly encoded and signaled.

The template-based motion estimation method may be applied a plurality of times to generate a plurality of prediction blocks for the current block. Specifically, the template-based motion estimation method may be applied to each of reference pictures that can be used by the current block, and based on this, up to N reference blocks may be selected from each reference picture. Here, N is 1 or an integer greater than 1. For example, if N is 1, as many reference blocks as the number of reference pictures can be generated.

Alternatively, by applying the template-based motion estimation method to each of the reference pictures, M reference blocks may be derived based on costs with respect to the current template. As an example, it is assumed that template-based motion estimation is applied to each of L reference pictures, and as a result, a reference block with the optimal cost in each reference picture is selected. Among the L reference blocks selected through the above process, M reference blocks can be selected in descending order of cost with respect to the current template. Here, M is an integer of 1 or more.

In the above example, N and/or M may have predefined values in the encoder and the decoder. Alternatively, N and/or M may be determined based on at least one of the size of the current block, the shape of the current block, or the number of samples in the current block.

By performing a weighted sum operation on a plurality of reference blocks derived through the above process, the final prediction block for the current block can be obtained. At this time, the weight assigned to each reference block may be determined based on the cost ratio between reference templates. As an example, if the final prediction block for the current block is obtained by performing a weighted sum operation on two reference blocks, the weight assigned to each of the first reference block and the second reference block may be determined by a ratio between a cost a for a first reference template around the first reference block and a cost b for a second reference template around the second reference block. For example, a weight of b/(a+b) may be applied to the first reference block, and a weight of a/(a+b) may be applied to the second reference block.

As another example, the ratio between the cost a for the first reference template and the cost b for the second reference template or the difference between the cost a and the cost b may be compared with a threshold value, and then the weights to be applied to the first reference block and the second reference block may be determined. For example, if the ratio or the difference does not exceed the threshold value, the same weight may be applied to the first reference block and the second reference block. Otherwise, different weights may be determined for the first reference block and the second reference block.

If the ratio or the difference exceeds the threshold value, a reference block with the optimal cost among the plurality of reference blocks may be selected as the prediction block for the current block.

In a case where the final prediction block is generated based on a plurality of prediction blocks, it is possible to perform a weighted sum operation only on some areas of the current block instead of the entire area of the current block.

As an example, a final prediction sample included in a first area in the current block may be obtained through a weighted sum operation of a prediction sample included in the first prediction block and a prediction sample included in the second prediction block. On the other hand, a final prediction sample included in a second area in the current block may be set to a prediction sample included in the first prediction block or may be set to a prediction sample included in the second prediction block. That is, in areas where a weighted sum operation is not performed, a value copied from a reference sample in the first reference picture or the second reference picture may be set as the final prediction sample.

An area where the weighted sum operation is applied may be determined on the basis of at least one of the distance from a specific boundary of the current block, the distance from a reconstructed pixel around the current block, the size of the current block, the shape of the current block, the number of samples in the current block, the inter-prediction mode used to obtain the motion vector of the current block, or whether bidirectional prediction is applied to the current block.

As another example, information for identifying an area where the weighted sum operation is applied may be explicitly encoded and signaled through a bitstream. As an example, the information may identify at least one of the position or angle of a partitioning line that separates an area where the weighted sum operation is applied (hereinafter referred to as a weighted sum area) and the other area (hereinafter referred to as an unweighted sum area).

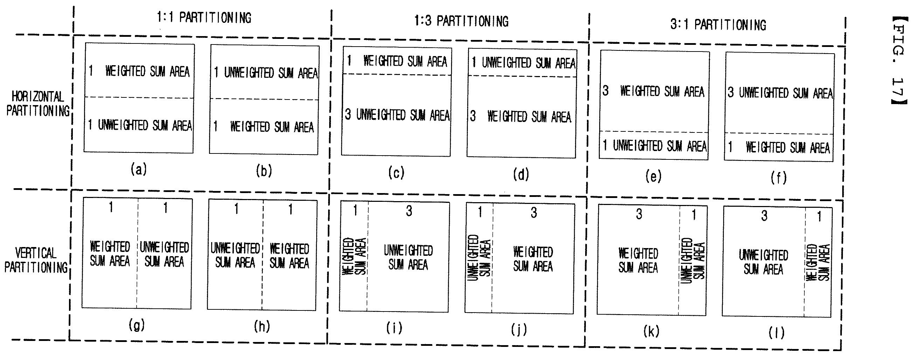

FIG. 17 shows various examples in which the current block is partitioned according to partition type.

According to the examples shown in FIG. 17, at least one of the following factors may be determined depending on the partition type of the current block.

1) Partitioning direction of the current block (horizontal partitioning/vertical partitioning
2) Whether the current block is symmetrically partitioned (whether partitioning is 1:1 partitioning)
3) Ratio (or type) of a weighted sum area to an unweighted sum area (whether the ratio between a weighted sum area and an unweighted sum area is 1:3 or 3:1)
4) Position of a weighted sum area (whether a weighted sum area is a first partition or a second partition)

Each of the above four factors may be encoded and signaled as a 1-bit flag. That is, a partition type of the current block can be determined by a plurality of flags.

For example, referring to the example in FIG. 17(d), horizontal partitioning is applied to the current block, and two divided partitions have a ratio of 1:3. Accordingly, a partitioning direction flag may be set to indicate the horizontal direction, and a symmetric partitioning flag may be set to indicate that the ratio is not 1:1.

Additionally, it is illustrated that the second (i.e., right) partition of the two partitions is designated as a weighted sum area. Accordingly, a flag indicating the ratio of the weighted sum area to the unweighted sum area is set to indicate 3:1, and a flag indicating the position of the weighted sum area is set to indicate the second partition.

Referring to the example shown in FIG. 17(h), vertical partitioning is applied to the current block, and two divided partitions have a ratio of 1:1. Accordingly, the partitioning direction flag may be set to indicate the vertical direction, and the symmetric partitioning flag may be set to indicate a 1:1 ratio. At this time, since the weighted sum area and the unweighted sum area have the same size, encoding/decoding of the flag indicating the ratio of the weighted sum area to the unweighted sum area can be omitted.

Since the second (i.e., right) partition of the two partitions is designated as a weighted sum area, the flag indicating the position of the weighted sum area is set to indicate the second partition.

As another example, an index indicating one of a plurality of partition type candidates may be encoded and signaled. The plurality of partition type candidates may be configured as shown in FIG. 17. Alternatively, more or fewer partition type candidates may be defined than those shown in FIG. 17.

Encoding/decoding of information indicating the ratio between the weighted sum area and the unweighted sum area may be omitted, and the larger or smaller partition of the two partitions may be set as the weighted sum area. For example, in the above-mentioned example, if the current block is partitioned at a ratio of 1:3 or 3:1, encoding/decoding of the flag indicating the position of the weighted sum area may be omitted, and the larger or smaller of the two partitions may be set as the weighted sum area.

In the above-described example, the ratio between the weighted sum area and the unweighted area is 1:1, 1:3, or 3:1. Unlike the example, the current block may be partitioned such that the ratio between the weighted sum area and the unweighted area is 1:15, 15:1, 1:31, or 31:1.

Instead of the flag indicating whether the weighted sum area and the unweighted area within the current block are partitioned in a symmetrical form, information indicating a ratio occupied by the weighted sum area or the unweighted area within the current block may be encoded and signaled, or an index corresponding to the ratio among a plurality of ratio values may be encoded and signaled.

Unlike the examples shown in FIG. 17, the weighted sum area and the unweighted area may be partitioned by a diagonal line.

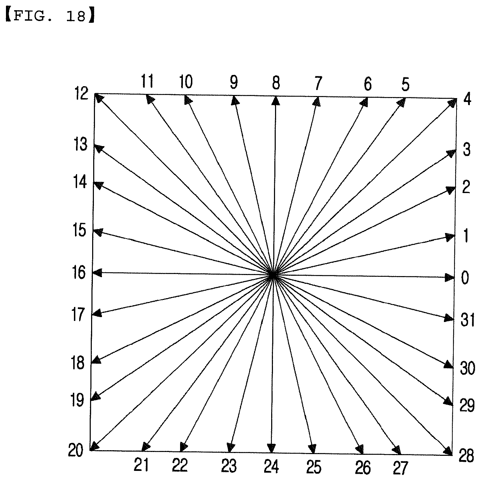

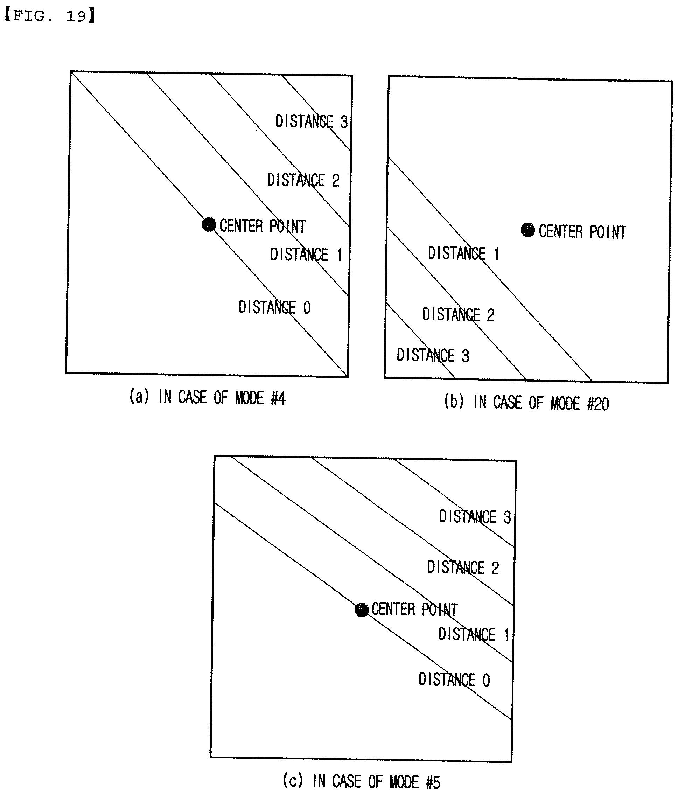

FIG. 18 is an example showing directions in which a partitioning line for partitioning the current block is located, and FIG. 19 is an example showing locations of partitioning lines.

In FIG. 18, 32 partitioning directions are illustrated, and different mode numbers are assigned to the respective partitioning directions. Additionally, in FIG. 19, a partitioning line passing through the center point of the current block is called a partitioning line with distance 0, and it is assumed that partitioning lines with distances 1 to 3 are present depending on distances from the center line.

The current block may be partitioned by a partitioning line perpendicular to a partitioning direction shown in FIG. 18. At this time, in order to prevent overlap between modes with opposite partitioning directions, the partitioning line with distance 0 may be set to be used as a candidate for only one of the modes with opposite partitioning directions.

For example, as in the example shown in FIG. 19, one of distances 0 to 3 is selectable when mode #4 is selected, whereas one of distances 1 to 3 is selectable when mode #20 is selected.

As in the examples shown in FIGs. 18 and 19, the partition type of the current block may be determined based on the partitioning direction and the distance of the partitioning line. To this end, information indicating the partitioning direction of the current block and information indicating the distance of the partitioning line may be encoded and signaled.

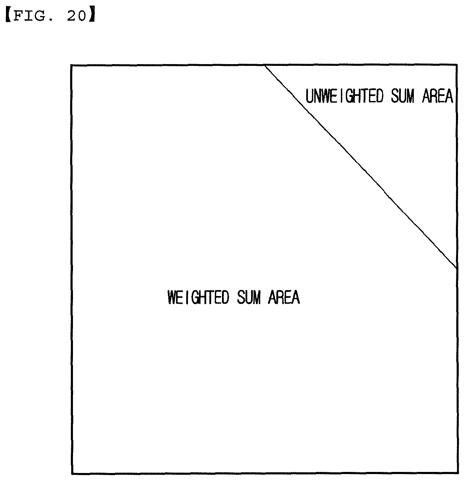

FIG. 20 shows an example in which the current block is partitioned according to the description of FIGs. 18 and 19.

When mode #5 in FIG. 18 is selected and distance 2 is selected, the current block can be partitioned into two areas, as in the example shown in FIG. 20.

Additionally, information indicating a weighted sum area among the two areas may be additionally encoded and signaled. Alternatively, the larger or smaller of the two areas may be designated as a default weighted sum area.

In the above example, a prediction sample is obtained by a weighted sum operation of the first prediction block and the second prediction block in the weighted sum area, and a prediction sample is obtained using only the first prediction block or the second prediction block in the unweighted sum area.

At this time, information indicating whether the first prediction block or the second prediction block is used to derive the prediction sample of the unweighted sum area may be explicitly encoded and signaled.

Alternatively, the prediction block used to derive the prediction sample of the unweighted sum area may be determined according to priorities of the first prediction block and the second prediction block. Here, the priorities of the first prediction block and the second prediction block may be determined on the basis of at least one of the temporal distance between the current picture and a reference picture, the temporal direction of the reference picture, the inter-prediction mode, the position of the unweighted sum area, or the cost with respect to the current template.

For example, a prediction block derived from a reference picture having a shorter distance from the current picture (i.e., smaller absolute value of the POC difference) between first and second reference pictures may have a higher priority. That is, if the temporal distance between the first reference picture and the current picture is less than the temporal distance between the current picture and the second reference picture, a prediction sample of the unweighted sum area can be derived using the first prediction block.

Alternatively, one of the first prediction block and the second prediction block may be selected in consideration of the cost between the current template and a reference template. As an example, the cost between the current template and a first reference template composed of reconstructed areas around the first prediction block (i.e., the first reference block) is compared with the cost between the current template and a second reference template composed of reconstructed areas around the second prediction block (i.e., the second reference block), and then a prediction block adjacent to the reference template with a lower cost can be used to derive a prediction sample of the unweighted sum area.

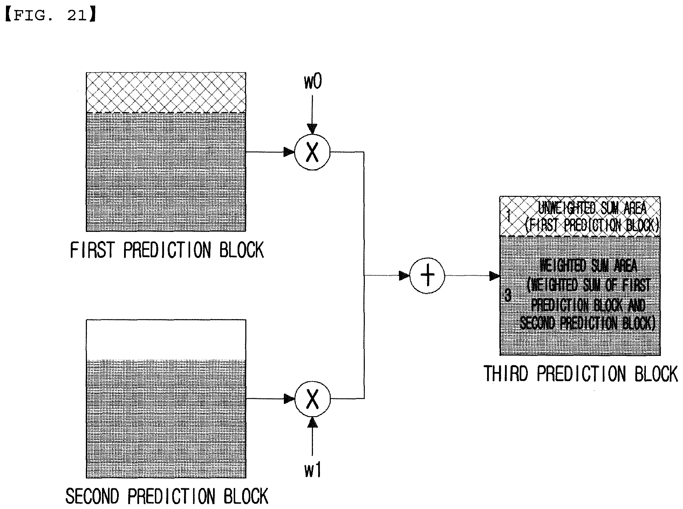

FIG. 21 shows an example of deriving prediction samples in a weighted sum area and an unweighted sum area.

A prediction sample included in the weighted sum area may be derived by performing a weighted sum operation on a prediction sample included in the first prediction block and a prediction sample included in the second prediction block. For example, as in the example shown in FIG. 21, a prediction sample within the weighted sum area may be derived by applying a weight wO to the prediction sample included in the first prediction block and applying a weight w1 to the prediction sample included in the second prediction block.

A prediction sample of the unweighted sum area may be generated by copying the prediction sample included in the first prediction block or the second prediction block. In the example shown in FIG. 21, the prediction sample of the unweighted sum area is generated by copying the prediction sample included in the first prediction block.

Filtering may also be performed at the boundary of the weighted sum area and the unweighted sum area. Filtering may be performed for smoothing between prediction samples included in the weighted sum area and prediction samples included in the unweighted sum area.

Filtering may be performed by assigning a first weight to a first prediction sample included in the weighted sum area and assigning a second weight to a second prediction sample included in the unweighted sum area. Here, the first prediction sample may be generated by performing a weighted sum operation on the prediction samples included in the first prediction block and the second prediction block, and the second prediction sample may be generated by copying the prediction sample included in the first prediction block or the second prediction block.

At this time, the weights assigned to the first prediction sample and the second prediction sample may be adaptively determined depending on location.

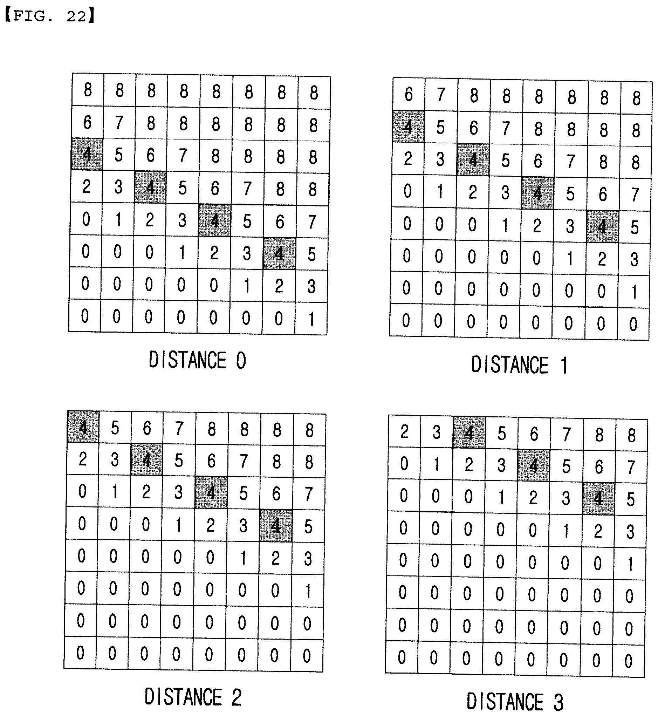

FIG. 22 shows an example in which a filter is applied based on the boundary between a weighted sum area and an unweighted sum area.

In FIG. 22, it is assumed that mode #5 is applied to an 8×8 block. Additionally, in the illustrated example, the number indicated on each sample represents the weight assigned to the first prediction sample. The weight applied to the second prediction sample may be derived by subtracting the weight assigned to the first prediction sample from an integer.

As in the example shown in FIG. 22, it can be ascertained that the first weight and the second weight are adaptively determined depending on the distance of the partitioning line and the positions of samples.

Upon determination of a weight for each position, a final prediction sample can be obtained through a weighted sum operation of the first prediction sample and the second prediction sample. The following equations 3 to 5 represent an example of obtaining a filtered prediction sample.

[Equation 3]

$$P[x][y]=(w[x][y]*P0[x][y]+(W_{Max}-w[x][y])*P1[x][y]+offset)\gg shift$$

[Equation 4]

$$shift=Log_2(W_{Max})$$

[Equation 5]

$$offset=1\ll(shift-1)$$

In equation 3, P0 indicates the first prediction sample and P1 indicates the second prediction sample. W indicates a weight matrix, and W_Max indicates the sum of maximum and minimum values in the weight matrix. For example, referring to the example of FIG. 22, W_Max may be set to 8. Shift and Offset denote normalization constants. Since W_Max is set to 8(2^3), the value of Shift can be set to 3, and the value of Offset can be set to 4.

In the above example, the current block is partitioned into a weighted sum area and an unweighted area, and then different prediction sample derivation methods are set for the respective areas. Unlike what has been described, a prediction sample may be derived by a weighted sum operation of the first prediction block and the second prediction block over the entire area of the current block, and weights applied to the first prediction block and the second prediction block may be set differently for each sample position, as shown in FIG. 22. In this case, the aforementioned partitioning line can be used as a factor for determining the weight assigned to each sample, instead of being a factor for partitioning the current block into a weighted sum area and an unweighted sum area.

To generate motion information for inter-prediction, the encoder can perform motion estimation. Additionally, as described above, in a case where the template-based motion estimation method, the bidirectional matching method, or the unidirectional matching method is applied, the decoder can also perform motion estimation in the same way as the encoder.

However, as the motion estimation process is applied, the complexity of the encoder and/or decoder sharply increases. In order to solve such a problem, a method of adaptively adjusting a search range based on characteristics of areas within a picture is proposed. Hereinafter, the search range adjustment method will be described in detail.

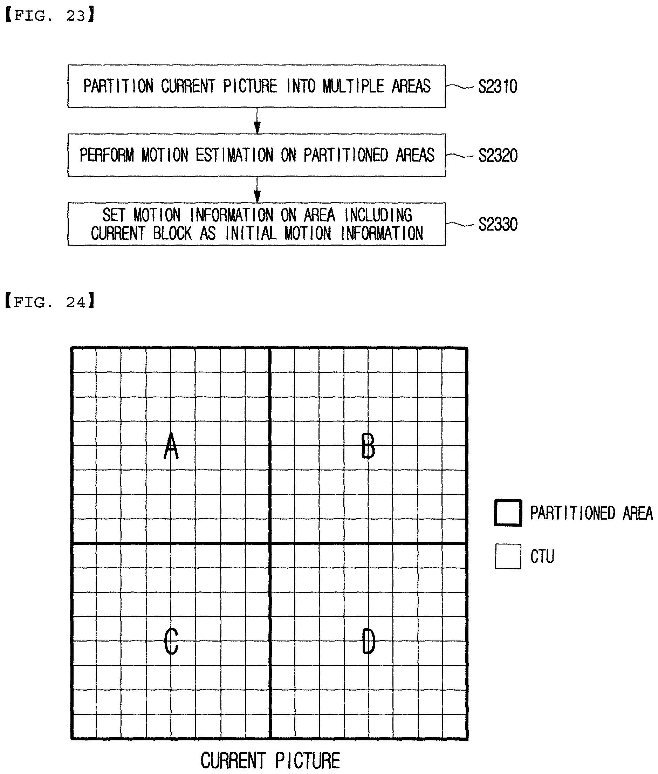

FIG. 23 is a flowchart of the search range adjustment method according to an embodiment of the present disclosure.

The current picture can be partitioned into a plurality of areas (S2310). Each area may be composed of one or more coding tree units (CTUs). Alternatively, a plurality of CTUs, a plurality of CUs, or a plurality of PUs may be defined as a single area.

Thereafter, motion estimation can be performed on each of the partitioned areas (S2320). Through the motion estimation, motion information on each area can be determined.

Thereafter, at the time of setting a search range for the current block, motion information of an area including the current block can be set as initial motion information of the current block (S2330). The initial motion information can be used at the time of setting a search area for the current block. As an example, the search area may be set within a predetermined range from a position identified by a motion vector indicated by the initial motion information within a reference picture indicated by the initial motion information.

FIG. 24 shows an example in which the current picture is partitioned into a plurality of areas.

In the example shown in FIG. 24, the current picture is partitioned into four areas of equal size, and each area is composed of 64 CTUs. A CTU can be set to size of 64×64, 128×128, or 256×256. If the size of the CTU is 64×64, each area shown in FIG. 24 has a size of 512×512.

The areas do not need to be of equal size as in the example shown in FIG. 24. For example, if each area is composed of 8×8 CTUs, there may be cases in which fewer than 8 CTU columns or CTU rows remain in the area adjacent to the right boundary or bottom boundary of the current picture. In this case, the area adjacent to the right boundary or bottom boundary of the current picture may have a size smaller than 8×8 (i.e., 64 CTUs).

Alternatively, a slice, tile, or sub-picture may be set as a single area.

After partitioning the current picture into a plurality of areas, motion estimation can be performed for each area. Accordingly, a reference picture and a motion vector for each area can be determined.

In the example of Figure 24, it is assumed that one partitioned area has a size of 512×512. Accordingly, motion estimation can be performed on the reference picture in units of 512×512 areas.

At this time, in a case where motion estimation is performed on an area adjacent to the boundary of the current picture, a problem may occur in which motion estimation of the area is forced to be performed in a specific direction. For example, in the example shown in FIG. 24, motion estimation for area A adjacent to the top boundary and left boundary of the current picture can be performed only in the right and left directions and cannot be performed in the left and top directions. Accordingly, a problem may occur in which motion information on the area does not properly reflect motion characteristics of blocks belonging to the area.

To solve the above problem, blocks bordering the current picture or N rows and/or M columns from the boundary of the current picture may be set not to be classified as a specific area.

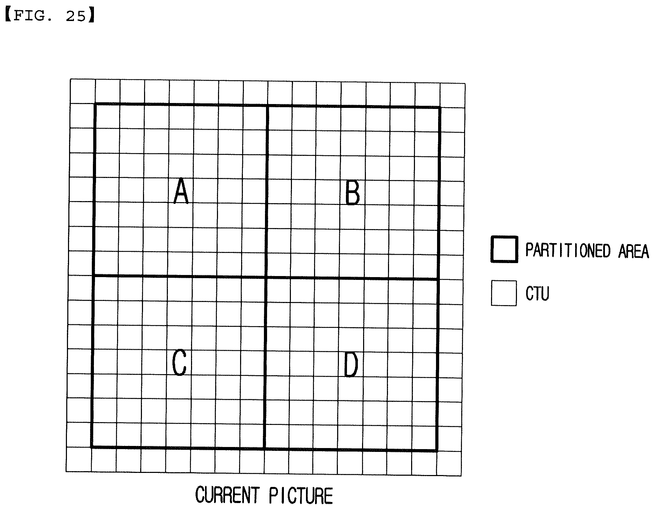

FIG. 25 shows an example of this.

FIG. 25 illustrates that the remaining CTUs excluding one CTU line bordering the current picture are partitioned into a plurality of areas. Accordingly, motion estimation for area A can be performed not only in the right and bottom directions, but also in the left and top directions as much as the size of the CTU.

When motion estimation is performed for an area, motion information on the area can be set as initial motion information of a block (e.g., a coding unit or a prediction unit) belonging to the area. For example, in a case where motion estimation for a coding unit is performed, motion information on the area to which the coding unit belongs can be set as initial motion information. When a reference position within a reference picture is designated based on the initial motion information, a search range for the coding unit can be set based on the reference position.

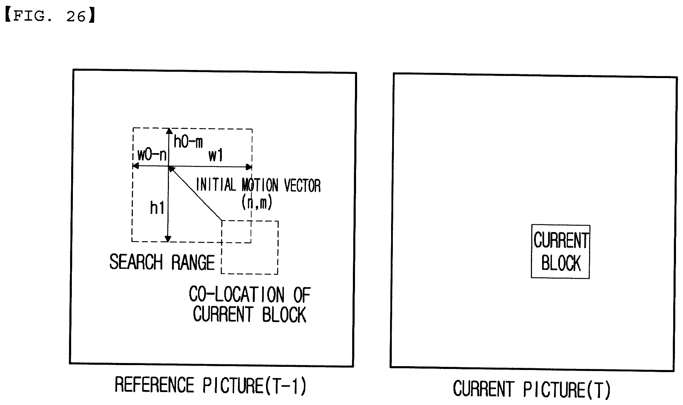

FIG. 26 shows an example in which the search range is set around a reference point.

For example, in the example shown in FIG. 3, a search range with a width of w0+w1 and a height of h0+h1 is set with the co-located position (x, y) as a center.

In a case where the search range is set around the reference point, w0, w1, h0, and h1 shown in FIG. 3 are used, and the search range set around the reference point can be limited such that it does not exceed the search range shown in FIG. 3. For example, if the reference point is (x-n, y-m) (n and m being natural numbers), the search range may have sizes of (w0-n), w1, (h0-m), and h1 with the reference point as the center.

That is, by using the initial motion information, the width and/or height of the search range can be reduced by n and/or m.

Instead of performing motion estimation in units of area, motion estimation may be performed only on the first CTU within an area (e.g., the upper left CTU within the area). In this case, motion information generated as a result of motion estimation performed on the first CTU in the area may be set as initial motion information of blocks (e.g., coding units or prediction units) included in the area. Accordingly, n and/or m may be set differently in a case based on motion information generated based on an area and a case based on motion information generated based on a CTU.

As another example, motion estimation is performed on blocks (e.g., coding units or prediction units) belonging to the first CTU in an area, and then at least one of the average values, minimum values, maximum values, or median values of motion vectors of the blocks may be set as an initial motion vector. In this case, motion estimation for the blocks belonging to the first CTU may be performed based on the search range to which w0, w1, h0, and h1 variables have been applied, as in the example shown in FIG. 3.

Alternatively, n and/or m may be determined based on the difference between a motion vector generated through motion estimation for the area and a motion vector generated through motion estimation for the first CTU in the area, or differences between the motion vector generated through motion estimation for the area and the average values, minimum values, maximum values, or median values of the motion vectors of the blocks belonging to the first CTU.

Alternatively, a result of motion estimation for a neighboring CTU of a CTU to which the current block belongs may be set as initial motion information. Here, the neighboring CTU may include at least one of the left or top CTU. Alternatively, one of motion vector average values, minimum values, maximum values, or median values for coding units belonging to the neighboring CTU may be set as an initial motion vector of the current block.

Initial motion information (e.g., motion information on an area) may be explicitly encoded and signaled to the decoder. When the decoder-side motion estimation mode described above is applied, a search range may be set based on the initial motion information. For example, when setting a search range through the above-described template-based motion estimation method, bidirectional matching method, or unidirectional matching method, the search range may be set based on initial motion information.

Alternatively, in a case where initial motion information is derived based on a previously reconstructed area (e.g., a neighboring CTU), encoding/decoding of the initial motion information may be omitted. In this case, the decoder can obtain the initial motion information by performing motion estimation in the same way as the encoder.

By allowing the search range to be adaptively adjusted in the decoder-side motion estimation mode, the complexity of the decoder can be reduced and reduction in coding efficiency can be minimized.

Unlike the above example, the search range may be adjusted based on motion characteristics within a picture. Motion characteristics can be derived based on difference values of samples in the current picture and a reference picture.

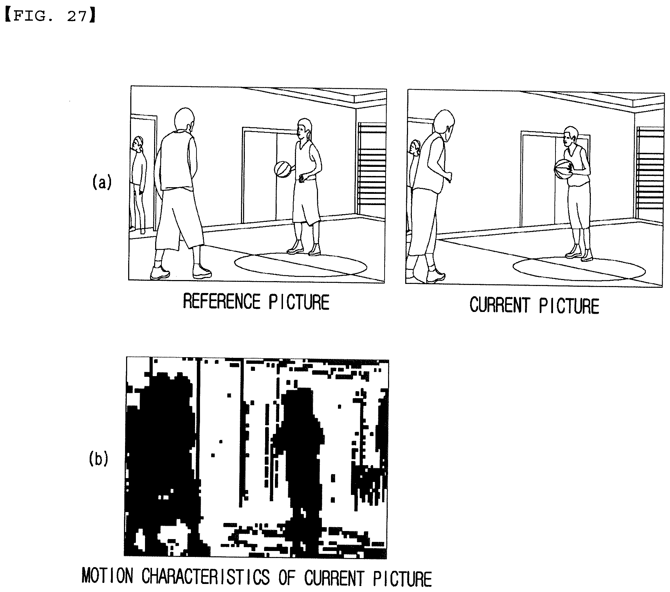

FIG. 27 shows an example of determining motion characteristics of the current picture.

The current picture can be partitioned into an area with strong motion and an area with weak motion. For example, in the example shown in FIG. 27(a), it can be predicted that the background area will be an area with weak motion, whereas the area where a subject appears will be an area with strong motion.

More specifically, in order to determine motion characteristics, the current picture and a reference picture may be partitioned into a plurality of areas.

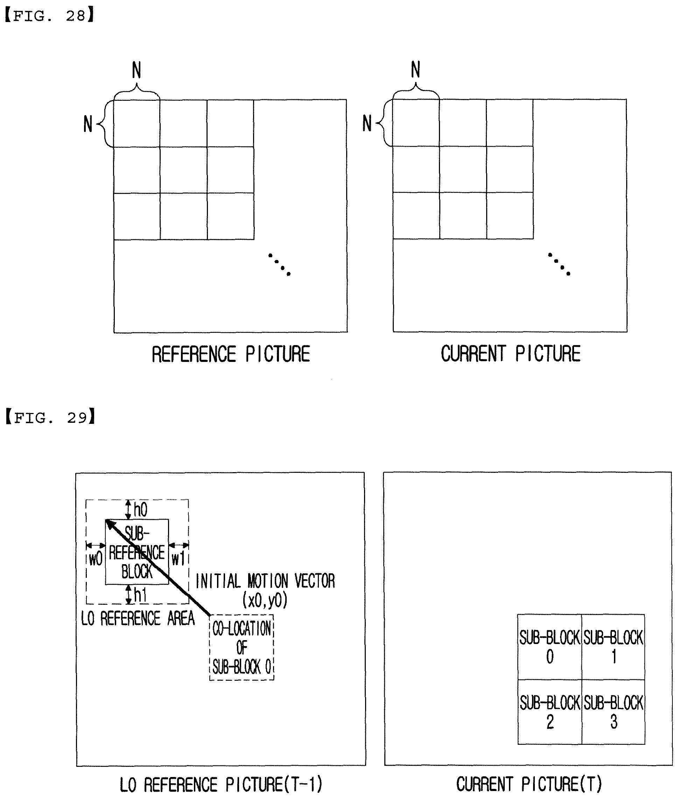

FIG. 28 shows an example of partitioning the current picture and a reference picture into a plurality of areas.

In FIG. 28, each area is a block of N×N size. One or a plurality of CTUs may be defined as a single area. Alternatively, one or a plurality of coding units (or prediction units) may be defined as a single area.

Alternatively, information indicating the size of an area may be explicitly encoded and signaled. For example, when the current picture and the reference picture are partitioned into square blocks of N×N size, information indicating N may be explicitly encoded and signaled.

Unlike the illustrated example, motion characteristics may be determined on a slice, tile, or sub-picture basis.

After partitioning the current picture and the reference picture into a plurality of areas, differences between co-located samples within areas are derived. That is, a difference between a sample included in the current picture and a sample at the same location as the sample in the reference picture can be derived.

Thereafter, the standard deviation of the difference value can be derived for each area. By comparing the standard deviation derived for each area with a threshold value, motion characteristics of the area can be determined. Here, the threshold value may be a value predefined in the encoder and/or decoder. Alternatively, the threshold value may be determined based on the bit depth of the current picture. Alternatively, after setting an appropriate threshold value in the encoder, information on the threshold value may be encoded and signaled to the decoder.

If the standard deviation is less than the threshold value, this means that there is almost no motion within the corresponding area. In this case, the area can be classified as an area with weak motion. If the standard deviation is equal to or greater than the threshold value, this means that significant motion is present within the area. In this case, the area can be classified as an area with strong motion.

FIG. 27(b) shows an example in which the current picture is classified into an area with strong motion and an area with weak motion according to the result of comparison between the standard deviation for each area and the threshold value.

In FIG. 27(b), the part expressed in black represents an area with strong motion, and the part expressed in white represents an area with weak motion.

A search range for motion estimation can be determined by referring to the motion characteristics of each area. Specifically, a search range for the current block can be determined based on whether the current block belongs to an area with strong motion or an area with weak motion.

For example, the search area when the current block belongs to an area with strong motion may be larger than the search area when the current block belongs to an area with weak motion.

Even when the decoder-side motion estimation mode is applied, the search range can be adjusted based on the motion characteristics of the current picture. In this case, information representing motion movement characteristics of each area may be explicitly encoded and signaled.

When bidirectional prediction is applied to the current block, an LO prediction block is generated based on LO motion information, and an L1 prediction block is generated based on L1 motion information. Thereafter, a prediction block for the current block can be generated through a weighted sum of the LO prediction block and the L1 prediction block.

At this time, the weight applied to the LO prediction block and the weight applied to the L1 prediction block may be derived based on a weight list. Specifically, upon selection of one of a plurality of weight candidates included in the weight list, the weight applied to the LO prediction block and the weight applied to the L1 prediction block may be determined based on the selected weight candidate.

equation 6 shows an example of generating a prediction block by a weighted sum operation performed on the LO prediction block and the L1 prediction block.

**[Equation 6]**

$$P_{bi}((1-w_f)*P_0+w_f*P_1)$$

In equation 6, PO indicates an LO prediction block, and P1 indicates an L1 prediction block. $P_{bi}$ indicates a prediction block generated through a weighted sum operation performed on the LO prediction block and the L1 prediction block. $w_f$ denotes a weight. The weight $w_f$ may be set to one of the plurality of weight candidates included in the weight list. As an example, in equation 6, a weight of $w_f$ is applied to the L1 prediction block, and a weight of $(1-w_f)$ is applied to the LO prediction block. On the other hand, a weight of $w_f$ may be applied to the LO prediction block, and a weight of $(1-w_f)$ may be applied to the L1 prediction block.

The weight $w_f$ may have a real value. At this time, in order to use an integer operation instead of a real number operation, the above equation 6 may be modified to the following equations 7 and 8.

**[Equation 7]**

$$M=1\ll prec, Off=1\ll(prec-1)$$

**[Equation 8]**

$$P_{bi}=((M-w)*P0+w*P_1+Off)\gg prec$$

In equations 7 and 8, prec indicates a scale value for integer operations. Hereinafter, it is assumed that prec is 3.

A weight list may include a plurality of weight candidates. The size of the weight list indicates the number of weight candidates included in the weight list.

An example of a weight list of size 5 is {-2, 3, 4, 5, 10}. Additionally, an example of a weight list of size 3 is {3, 4, 5}.

The number and/or type of weight candidates constituting a weight list are not limited to the above examples. Additionally, a weight candidate having a value of 0 may be included in the weight list.

The size of the weight list may be predefined in the encoder and decoder. Further, the size of the weight list may be determined based on at least one of whether the POC of the current picture is in between the POC of an LO reference picture and the POC of an L1 reference picture, whether the POC of the current picture is less or greater than the POC of the LO reference picture and/or the L1 reference picture, the POC difference between the current picture and the LO reference picture, or the POC difference between the current picture and the L1 reference picture.

Alternatively, one of a plurality of weight lists may be selected. In this case, index information for identifying one of the plurality of weight lists may be encoded and signaled. Alternatively, one of the plurality of weight lists may be adaptively selected based on at least one of whether the POC of the current picture is in between the POC of an LO reference picture and the POC of an L1 reference picture, whether the POC of the current picture is less or greater than the POC of the LO reference picture and/or the L1 reference picture, the POC difference between the current picture and the LO reference picture, or the POC difference between the current picture and the L1 reference picture.

The encoder may explicitly encode index information indicating a selected weight candidate in the weight list and transmit the same to the decoder. Alternatively, one of weight candidates may be selected based on at least one of the size of the current block, the POC of the current block, the POC of the LO reference picture, or the POC of the L1 reference picture.

Whether to determine a weight using the weight list may be determined based on at least one of the size of the current block, the number of samples included in the current block, the shape of the current block, the POC of the current block, the POC of the LO reference picture, or the POC of the L1 reference picture. For example, only when the number of samples included in the current block is equal to or greater than a threshold value, a weight can be determined using the weight list. That is, if the number of samples included in the current block is less than the threshold value, the weight list may be set not to be used.

If it is determined that the weight list is not used, a prediction block can be derived by averaging the LO prediction block and the L1 prediction block. For example, if prec is 3, M is 8 in equation 7. Accordingly, when the weight list is not applied, the weight w can be set to 4 in equation 7.

If it is determined that the weight list is not used, signaling of index information indicating one of the weight candidates can be omitted, and a prediction block can be derived using the same method (i.e., averaging operation) in the encoder and the decoder.

In a case where the motion information merge mode is applied, the weight of the current block may be derived from a motion information merge candidate. As an example, the weight of the current block can be set to be the same as the motion information merge candidate. To this end, the motion information merge candidate may include information on the weight as well as information on a motion vector, a reference picture index, and a prediction direction.

The motion information of the current block can be corrected in the same way in the encoder and the decoder. Specifically, if the motion information of the current block is derived based on the decoder-side motion estimation mode or the motion information signaling mode, the derived motion information can be corrected using the template-based motion estimation method, the bidirectional matching method, or the unidirectional matching method.

For example, when LO motion information and L1 motion information have been generated through the template-based motion estimation method, the LO motion information and/or the L1 motion information can be corrected by applying the bidirectional matching method or the unidirectional matching method.

Alternatively, when the motion information of the current block has been derived through the motion information merge list, the motion information can be corrected by applying the template-based motion estimation method, the bidirectional matching method, or the unidirectional matching method.

Information indicating whether to correct the motion information may be explicitly encoded and signaled.

Alternatively, it may be determined whether to correct the motion information on the basis of a predefined condition. At least one of whether the motion information has been derived based on the motion information merge mode, whether bidirectional prediction is applied to the current block, whether the width and/or the height of the current block are equal to or greater than a threshold value, whether the number of samples within the current block is equal to or greater than a threshold value, whether the weights applied to the LO prediction block and the L1 prediction block are the same (i.e., whether an averaging operation has been applied), or whether a brightness compensation technique (e.g., weighted prediction) has not been used may be used as the predefined condition.

When there is a plurality of predefined conditions, it may be determined to correct the motion information if at least one of the plurality of predefined conditions or all of the predefined conditions are satisfied.

As another example, it is possible to determine whether to correct the motion information by comparing the cost between prediction blocks identified by the motion information or the cost between the current template and a reference template with a threshold value. As an example, only when the cost between an LO prediction block (i.e., LO reference block) derived based on LO motion information and an L1 prediction block (i.e., L1 reference block) derived based on L1 motion information is greater than the threshold value, the motion information can be corrected.

Alternatively, it is possible to determine whether to correct the motion information by comparing the cost between the current template and the reference template with a threshold value. The reference template may be determined based on the motion information. For example, the motion information can be corrected only when the cost between the current template and the reference template is greater than the threshold value.

In the above example, the threshold value may be set based on the size of the current block or the number of samples within the current block. As an example, the number of samples (e.g., width $\times$ height) in the current block can be set as the threshold value, or an N multiple of the number of samples can be set as the threshold value. As in an example which will be described later, when motion compensation is performed on a sub-block basis, the number of samples in a sub-block or an N multiple of the number of samples may be set as the threshold value.

Alternatively, the threshold value may be predefined in the encoder and/or the decoder.

Alternatively, the threshold value may be adaptively determined based on at least one of a bit depth or a color component.

If it is determined to correct the motion information, the motion information may be corrected based on the template-based motion estimation method, the bidirectional matching method, or the unidirectional matching method. At this time, the method used to correct the motion information may be predefined in the encoder and the decoder. As an example, the template-based motion estimation method may be regularly used to correct the motion information.

Alternatively, information indicating one of a plurality of decoder-side motion estimation methods may be encoded and signaled. For example, when motion compensation is performed using one of the template-based motion estimation method and the bidirectional matching method, information (e.g., a flag) indicating one of the two methods may be encoded and signaled.

Alternatively, information indicating whether motion information is corrected using the template-based motion estimation method and information indicating whether motion information is corrected using the bidirectional matching method may be encoded and signaled, respectively.

Alternatively, a method on which motion compensation is based may be selected on the basis of at least one of the size of the current block, the shape of the current block, the POC of the current picture, the POC of the LO reference picture, the POC of the L1 reference picture, or whether bidirectional prediction is performed. For example, in a case where motion information derived based on a motion information merge candidate has unidirectional information (e.g., LO motion information or L1 motion information), motion information can be corrected by applying the template-based motion estimation method. On the other hand, in a case where the motion information derived based on the motion information merge candidate has bidirectional information (i.e., LO motion information and L1 motion information), the motion information can be corrected by applying the bidirectional matching method or the unidirectional matching method.

When motion information on a coding unit or a prediction unit has been derived, motion correction can be performed on the coding unit or the prediction unit.

Alternatively, the motion information may be corrected in units of sub-blocks smaller than the coding unit or the prediction unit.

Hereinafter, a process of correcting motion information will be described. The motion information before correction will be referred to as initial motion information.

After the initial motion information is derived, the current block can be partitioned into a plurality of sub-blocks. The size of the sub-block may be predefined in the encoder and the decoder. As an example, the current block can be partitioned into sub-blocks of 4×4 or 8×8 size.

Alternatively, the size of the sub-block may be adaptively determined based on at least one of the size or shape of the current block.

Thereafter, motion information can be corrected for each sub-block.

FIG. 29 is a diagram illustrating an example in which motion information for each sub-block is corrected.

For convenience of description, it is assumed that the current block is 8×8 in size and the sub-block is 4×4 in size.

In addition, it is assumed that the initial motion information is derived based on the motion information merge list, and an initial motion vector is corrected using the bidirectional matching method.

Based on the initial motion information, a start point within a reference picture can be designated for each sub-block. Specifically, a position spaced apart by the initial motion vector from the upper left position of a sub-block within a reference picture indicated by an initial reference picture index can be designated as a start point.

A reference area can be set by extending the boundary of a sub-reference block by a predetermined value on the basis of the sub-reference block having the upper left position as a start point. For example, as in the example shown in FIG. 29, the reference area is set by extending the boundaries of the four sides of the sub-reference block by w0, w1, h0, and h1, respectively.

If w0, w1, h0, and h1 are each 2, the reference area for the 4×4 sub-block can have a size of 8×8.

If a start point indicated by a motion vector is a fractional position, a reference area can be generated through interpolation.

If the initial motion information includes both LO motion information and L1 motion information, a reference area can be set for each of the LO direction and L1 direction.

Then, within the reference area for the LO direction and the reference area for the L1 direction, the bidirectional matching method is applied to select a combination of an LO sub-reference block and an L1 sub-reference block with the optimal cost.

For example, if the size of a sub-block is 4×4 and the size of a reference area is 8×8, costs for a total of 25 pairs of LO sub-reference block and L1 sub-reference block combinations can be calculated. Here, a vector (i.e., LO difference vector) between LO sub-reference blocks at the start point of an LO reference picture and a vector (i.e., L1 difference vector) between L1 sub-reference blocks at the start point of an L1 reference picture may have the same magnitude and opposite directions.

Upon determination of the pair with the lowest cost among the LO sub-reference block and L1 sub-reference block combinations, the motion vector can be corrected to the positions of the corresponding LO sub-reference block and L1 sub-reference block.

As a result, in the example of FIG. 29, a corrected motion vector can be derived by adding a value between (-2, -2) and (2, 2) to the initial motion vector (xO, yO).

As a result of correction of the initial motion vector according to the example shown in FIG. 29, the horizontal component (i.e., x-axis component) and vertical component (i.e., y-axis component) of the motion vector are corrected by an integer between -2 and 2. Accordingly, this correction may be referred to as integer position correction.

After performing integer position correction, fractional position correction may be additionally performed. Fractional position correction can be performed using a reference block composed of fractional position samples within a reference area.

In this case, the position of the reference block determined to have the optimal cost in the integer position correction process may be set as a start point for fractional position correction, and fractional position reference samples may be generated in predefined units on the basis of the start point. Here, the predefined unit may be 1/16, 1/8, 1/4, or 1/2.

Thereafter, a combination of an LO sub-reference block and an L1 sub-reference block having the optimal cost is selected among LO sub-reference blocks and L1 sub-reference blocks composed of fractional position reference pixels.

Upon determination of the pair with the lowest cost among the LO sub-reference block and L1 sub-reference block combinations, the motion vector can be corrected to the positions of the corresponding LO sub-reference block and L1 sub-reference block.

Whether to perform fractional position correction may be determined on the basis of whether a sub-reference block selected according to integer position correction is in contact with the boundary of the reference area. That is, it is possible to determine whether to correct a fractional position on the basis of whether the corrected motion vector points to the edge of the reference area. If the corrected motion vector points to the edge of the reference area, fractional position correction may not be performed. If not, fractional position correction may be additionally performed.

Here, the edge of the reference area may represent one of the left boundary, top boundary, bottom boundary, or right boundary.

Alternatively, the minimum cost calculated in the integer position correction process may be compared with a threshold value to determine whether to perform fractional positioning. As an example, fractional position correction can be performed only when a combination with the minimum cost among the LO sub-reference block and L1 sub-reference block combinations is equal to or greater than the threshold value.

Alternatively, it may be determined whether to perform fractional position correction in consideration of the precision of the initial motion vector is in integer units or fractional units.

FIG. 29 illustrates that the initial motion vector is corrected on a sub-block basis. Unlike the illustrated example, the initial motion vector may be corrected for a coding unit or a prediction unit.

Furthermore, the initial motion vector may be corrected using the template-based motion estimation method rather than the bidirectional matching method. In this case, correction of the initial motion vector may be performed based on the cost between the current template and the reference template.

As another example, after correcting the initial motion vector for a coding unit or a prediction unit, the corrected motion vector may be re-corrected on a sub-block basis.

Alternatively, the initial motion vector may be corrected only for one of the LO direction and the L1 direction, and the initial motion vector may not be corrected for the other direction. For example, for the LO direction, the initial motion vector may be corrected and then an LO prediction block may be derived using the corrected motion vector. On the other hand, for the L1 direction, an L1 prediction block may be derived using the initial motion vector without correcting the initial motion vector.

As in the example above, correcting the motion vector for only one of the LO direction and the L1 direction can be applied on a block level or sub-block basis.

When applying the bidirectional matching method, a weight may be applied at the time of calculating the cost between two reference blocks. That is, instead of calculating the cost on the basis of the difference between L0 and L1 reference blocks, the cost can be calculated on the basis of the difference between the LO reference block to which a first weight has been applied and the L1 reference block to which a second weight has been applied.

For example, in a case where a motion information merge candidate selected from the motion information merge list has bidirectional motion information, weights to be applied to the LO reference block and the L1 reference block can be determined on the basis of a weight derived from the motion information merge candidate.

As an example, if an LO direction weight (e.g., M-w in equation 8) derived from the motion information merge candidate is 5 and an L1 direction weight is 3, weights of 5 and 3 are respectively applied to the LO block and L1 reference block, to calculate the cost. That is, the cost can be calculated on the basis of the difference between $(5 \times \text{L0\_Pred})$ and $(3 \times \text{L1\_Pred})$. Here, LO_Pred represents an LO reference block, and L1_Pred represents an L1 reference block.

Alternatively, the weights used for the LO reference block and L1 reference block may be determined on the basis of a weight list. In this case, a weight list for bidirectional prediction can be used in the same manner. Alternatively, a simplified list compared to the weight list for bidirectional prediction may be used. A simplified list means a list including fewer weight candidates than the weight list for bidirectional prediction.

Alternatively, a weight list separate from the weight list for bidirectional prediction may be set.

Each of weight candidates included in the weight list can be applied to the LO reference block and the L1 reference block. In this case, the motion vector of the current block can be corrected by selecting one of combinations of a weight candidate, an LO reference block, and an L1 reference block, which has the optimal cost.

Among the weight candidates included in the weight list, only some candidate(s) may be set to be available.

Weights may be used in a case where a motion vector is corrected using the template-based motion estimation method in addition to the bidirectional matching method. At this time, the first weight applied to the LO reference block and the second weight applied to the L1 reference block may be applied to the reference template and the current template, respectively.

Applying the embodiments described focusing on the decoding process or the encoding process to the encoding process or the decoding process is included in the scope of the present disclosure. Modification of the embodiments described in a predetermined order to embodiments in an order different from the predetermined order is also included in the scope of the present disclosure.

Although the above disclosure has been described based on a series of steps or a flowchart, this does not limit the chronological order of the disclosure and the series of steps may be performed simultaneously or in a different order as needed. In addition, each of components (e.g., units, modules, etc.) constituting a block diagram in the above-described disclosure may be implemented as a hardware device or software, and a plurality of components may be combined to form a single hardware device or software. The above-described disclosure may be implemented in the form of program instructions that can be executed through various computer components and recorded on a computer-readable recording medium. The computer-readable recording medium may include program instructions, data files, data structures, and the like alone or in combination. Examples of computer-readable recording media include magnetic media such as a hard disk, a floppy disk, and a magnetic tape, optical recording media such as a CD-ROM and a DVD, magneto-optical media such as a floptical disks, and hardware devices specifically configured to store and execute program instructions, such as a ROM, a RAM, and a flash memory. The hardware devices may be configured to operate as one or more software modules to perform processing according to the present disclosure, and vice versa.

**Industrial Availability**

The present disclosure may be applied to a computing or electronic device which may encode/decode a video signal.

**Claims**

1.    A method of decoding a video, the method comprising:

obtaining a first prediction block for a current block based on a first inter-prediction mode;
obtaining a second prediction block for the current block based on a second inter-prediction mode; and
obtaining a final prediction block for the current block based on the first prediction block and the second prediction block.

2.    The video decoding method of claim 1, wherein at least one of the first inter-prediction mode or the second inter-prediction mode is a decoder-side motion estimation mode in which a decoder performs motion estimation in the same manner as an encoder using a previously reconstructed reference picture.

3.    The video decoding method of claim 2, wherein the motion estimation includes a process of searching for a combination with an optimal cost among combinations of a current template composed of a previously reconstructed area around the current block and a reference template of the same size as the current template within the reference picture.

4.    The video decoding method of claim 3, wherein the motion estimation is performed on each of reference pictures having reference picture indices less than a threshold value in a reference picture list.

5.    The video decoding method of claim 3, wherein the motion estimation is performed on each of reference pictures whose output order differences from a current picture are equal to or less than a threshold value in the reference picture list.

6.    The video decoding method of claim 3, wherein the reference template is searched for within a search range set in the reference picture, and the search range is set on the basis of initial motion information of the current block.

7.    The video decoding method of claim 6, wherein the initial motion information is motion information on an area larger than the current block.

8.    The video decoding method of claim 3, wherein the reference template is searched for within the search range set in the reference picture, the search range is determined on the basis of motion characteristics of an area including the current block, and the motion characteristics of the area are set to one of an area with strong motion or an area with weak motion.

9.    The video decoding method of claim 2, wherein the motion estimation includes a process of searching for a combination with an optimal cost among combinations of an LO reference block included in an LO reference picture and an L1 reference block included in an L1 reference picture.

10.    The video decoding method of claim 9, wherein an output order of the current picture is in between an output order of the LO reference picture and an output order of the L1 reference picture.

11.    The video decoding method of claim 1, wherein the first inter-prediction mode is used for LO direction prediction of the current block, and the second inter-prediction mode is used for L1 direction prediction of the current block.

**12.** The video decoding method of claim 1, wherein the final prediction block is derived on the basis of a weighted sum operation of the first prediction block and the second prediction block, and a first weight assigned to the first prediction block and a second weight assigned to the second prediction block during the weighted sum operation are adaptively determined depending on a type of the first inter-prediction mode or the second inter-prediction mode.

**13.** The video decoding method of claim 12, wherein the first weight has a value greater than the second weight in a case where the first inter-prediction mode is a decoder-side motion estimation mode and the second inter-prediction mode is a motion information signaling mode.

**14.** A method of encoding a video, the method comprising:

obtaining a first prediction block for a current block on the basis of a first inter-prediction mode;
obtaining a second prediction block for the current block on the basis of a second inter-prediction mode; and
obtaining a final prediction block for the current block on the basis of the first prediction block and the second prediction block.

**15.** A computer-readable recording medium recording bitstreams generated by a video encoding method comprising:

obtaining a first prediction block for a current block on the basis of a first inter-prediction mode;
obtaining a second prediction block for the current block on the basis of a second inter-prediction mode; and
obtaining a final prediction block for the current block on the basis of the first prediction block and the second prediction block.

【FIG. 1】

EP 4 404 566 A1

100

Current picture → Picture partitioning module 110 → Prediction target block

Inter prediction module 120

Intra prediction module

125

Residual block + − Transform module 130 → Quantization module 135 → Rearrangement module 160 → Entropy encoding module 165 → NAL

Memory 155 ← Filter module 150 ← ← Reconstructed residual block + + Inverse transform module 145 ← Inverse quantization module 140

【FIG. 2】

【FIG. 3】

REFERENCE PICTURE(T-1)                    CURRENT PICTURE(T)

【FIG. 4】

L0 REFERENCE PICTURE(T-1)                 CURRENT PICTURE(T)

【FIG. 5】

LO REFERENCE PICTURE(T-1)　　　　CURRENT PICTURE(T)　　　　L1 REFERENCE PICTURE(T-1)

【FIG. 6】

【FIG. 7】

REFERENCE TEMPLATE ···

CO-LOCATION OF CURRENT TEMPLATE

SEARCH RANGE

REFERENCE PICTURE(T-1)

CURRENT TEMPLATE

CURRENT BLOCK

CURRENT PICTURE(T)

【FIG. 8】

【FIG. 9】

MOTION VECTOR (x0,y0)

LO REFERENCE BLOCK

LO REFERENCE PICTURE(T-1)

CURRENT BLOCK

CURRENT PICTURE(T)

MOTION VECTOR (x1,y1)=(-x0,-y0)

L1 REFERENCE BLOCK

L1 REFERENCE PICTURE(T+1)

【FIG. 10】

MOTION VECTOR (x1,y1)=2*(x0,y0)

FIRST REFERENCE BLOCK

LO REFERENCE PICTURE(T-2)

MOTION VECTOR (x0,y0)

SECOND REFERENCE BLOCK

LO REFERENCE PICTURE(T-1)

CURRENT BLOCK

CURRENT PICTURE(T)

【FIG. 11】

【FIG. 12】

REFERENCE SAMPLE

PREDICTION SAMPLE

【FIG. 13】

REFERENCE SAMPLE

【FIG. 14】

PREDICTION SAMPLE

INTEGER POSITION REFERENCE SAMPLE

FRACTIONAL POSITION REFERENCE SAMPLE

【FIG. 15】

| |
|---|
| GENERATE FIRST PREDICTION BLOCK ON BASIS OF FIRST INTER-PREDICTION MODE |

~ S1510

| |
|---|
| GENERATE SECOND PREDICTION BLOCK ON BASIS OF SECOND INTER-PREDICTION MODE |

~ S1520

| |
|---|
| GENERATE FINAL PREDICTION BLOCK ON BASIS OF FIRST PREDICTION BLOCK AND SECOND PREDICTION BLOCK |

~ S1530

【FIG. 16】

REFERENCE TEMPLATE
L0 PREDICTION BLOCK
MOTION VECTOR (x0,y0)
CO-LOCATION OF CURRENT TEMPLATE
SEARCH RANGE
REFERENCE PICTURE(T-1)

CURRENT TEMPLATE
CURRENT BLOCK
CURRENT PICTURE(T)

L1 PREDICTION BLOCK
MOTION VECTOR (x1,y1)
CO-LOCATION OF CURRENT BLOCK
L1 REFERENCE PICTURE(T-1)

【FIG. 17】

【FIG. 18】

【FIG. 19】

(a) IN CASE OF MODE #4

(b) IN CASE OF MODE #20

(c) IN CASE OF MODE #5

【FIG. 20】

UNWEIGHTED SUM AREA

WEIGHTED SUM AREA

【FIG. 21】

FIRST PREDICTION BLOCK

SECOND PREDICTION BLOCK

THIRD PREDICTION BLOCK

【FIG. 22】

| 8 | 8 | 8 | 8 | 8 | 8 | 8 | 8 |
|---|---|---|---|---|---|---|---|
| 6 | 7 | 8 | 8 | 8 | 8 | 8 | 8 |
| 4 | 5 | 6 | 7 | 8 | 8 | 8 | 8 |
| 2 | 3 | 4 | 5 | 6 | 7 | 8 | 8 |
| 0 | 1 | 2 | 3 | 4 | 5 | 6 | 7 |
| 0 | 0 | 0 | 1 | 2 | 3 | 4 | 5 |
| 0 | 0 | 0 | 0 | 0 | 1 | 2 | 3 |
| 0 | 0 | 0 | 0 | 0 | 0 | 0 | 1 |

DISTANCE 0

| 6 | 7 | 8 | 8 | 8 | 8 | 8 | 8 |
|---|---|---|---|---|---|---|---|
| 4 | 5 | 6 | 7 | 8 | 8 | 8 | 8 |
| 2 | 3 | 4 | 5 | 6 | 7 | 8 | 8 |
| 0 | 1 | 2 | 3 | 4 | 5 | 6 | 7 |
| 0 | 0 | 0 | 1 | 2 | 3 | 4 | 5 |
| 0 | 0 | 0 | 0 | 0 | 1 | 2 | 3 |
| 0 | 0 | 0 | 0 | 0 | 0 | 0 | 1 |
| 0 | 0 | 0 | 0 | 0 | 0 | 0 | 0 |

DISTANCE 1

| 4 | 5 | 6 | 7 | 8 | 8 | 8 | 8 |
|---|---|---|---|---|---|---|---|
| 2 | 3 | 4 | 5 | 6 | 7 | 8 | 8 |
| 0 | 1 | 2 | 3 | 4 | 5 | 6 | 7 |
| 0 | 0 | 0 | 1 | 2 | 3 | 4 | 5 |
| 0 | 0 | 0 | 0 | 0 | 1 | 2 | 3 |
| 0 | 0 | 0 | 0 | 0 | 0 | 0 | 1 |
| 0 | 0 | 0 | 0 | 0 | 0 | 0 | 0 |
| 0 | 0 | 0 | 0 | 0 | 0 | 0 | 0 |

DISTANCE 2

| 2 | 3 | 4 | 5 | 6 | 7 | 8 | 8 |
|---|---|---|---|---|---|---|---|
| 0 | 1 | 2 | 3 | 4 | 5 | 6 | 7 |
| 0 | 0 | 0 | 1 | 2 | 3 | 4 | 5 |
| 0 | 0 | 0 | 0 | 0 | 1 | 2 | 3 |
| 0 | 0 | 0 | 0 | 0 | 0 | 0 | 1 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

DISTANCE 3

【FIG. 23】

```
┌────────────────────────────────────────────────┐
│ PARTITION CURRENT PICTURE INTO MULTIPLE AREAS   │──── S2310
└────────────────────────────────────────────────┘
                        │
                        ▼
┌────────────────────────────────────────────────┐
│ PERFORM MOTION ESTIMATION ON PARTITIONED AREAS  │──── S2320
└────────────────────────────────────────────────┘
                        │
                        ▼
┌────────────────────────────────────────────────┐
│ SET MOTION INFORMATION ON AREA INCLUDING        │──── S2330
│ CURRENT BLOCK AS INITIAL MOTION INFORMATION     │
└────────────────────────────────────────────────┘
```

【FIG. 24】

□ PARTITIONED AREA

□ CTU

CURRENT PICTURE

【FIG. 25】

CURRENT PICTURE

【FIG. 26】

REFERENCE PICTURE(T-1)

CURRENT PICTURE(T)

【FIG. 27】

(a)

REFERENCE PICTURE

CURRENT PICTURE

(b)

MOTION CHARACTERISTICS OF CURRENT PICTURE

【FIG. 28】

REFERENCE PICTURE          CURRENT PICTURE

【FIG. 29】

LO REFERENCE PICTURE(T-1)          CURRENT PICTURE(T)

## INTERNATIONAL SEARCH REPORT

International application No.

**PCT/KR2022/013787**

### A. CLASSIFICATION OF SUBJECT MATTER

**H04N 19/513**(2014.01)i; **H04N 19/176**(2014.01)i; **H04N 19/105**(2014.01)i; **H04N 19/56**(2014.01)i; **H04N 19/70**(2014.01)i; **H04N 19/543**(2014.01)i; **H04N 19/57**(2014.01)i; **H04N 19/132**(2014.01)i; **H04N 19/593**(2014.01)i; **H04N 19/119**(2014.01)i

According to International Patent Classification (IPC) or to both national classification and IPC

### B. FIELDS SEARCHED

Minimum documentation searched (classification system followed by classification symbols)

H04N 19/513(2014.01); H04N 19/105(2014.01); H04N 19/137(2014.01); H04N 19/176(2014.01); H04N 19/44(2014.01); H04N 19/503(2014.01); H04N 19/57(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인터(inter), 예측(predict), 움직임(motion), 추정(estimation), 참조 픽처(reference picture), 목록(list)

### C. DOCUMENTS CONSIDERED TO BE RELEVANT

| Category* | Citation of document, with indication, where appropriate, of the relevant passages | Relevant to claim No. |
|---|---|---|
| X<br><br>Y | KR 10-2021-0036420 A (LG ELECTRONICS INC.) 02 April 2021 (2021-04-02)<br>See paragraphs [0035], [0061]-[0066] and [0070]-[0074]; and figure 2. | 1-2,9-15<br><br>3-8 |
| Y | KR 10-2020-0108432 A (QUALCOMM INCORPORATED) 18 September 2020 (2020-09-18)<br>See paragraphs [0068], [0070] and [0119]. | 3-8 |
| Y | KR 10-1443701 B1 (ELECTRONICS AND TELECOMMUNICATIONS RESEARCH INSTITUTE) 29 September 2014 (2014-09-29)<br>See claim 6. | 8 |
| X | KR 10-2018-0005121 A (KT CORPORATION) 15 January 2018 (2018-01-15)<br>See paragraphs [0209]-[0214]; and figure 15. | 1,14-15 |

☑ Further documents are listed in the continuation of Box C.   ☑ See patent family annex.

| | | |
|---|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family | |

| Date of the actual completion of the international search | Date of mailing of the international search report |
|---|---|
| **22 December 2022** | **10 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2022/013787** |

**C.    DOCUMENTS CONSIDERED TO BE RELEVANT**

| Category* | Citation of document, with indication, where appropriate, of the relevant passages | Relevant to claim No. |
| --- | --- | --- |
| X | WINKEN, Martin et al. CE10: Multi-hypothesis inter prediction (Test 10.1.2). JVET-M0425-v2, Joint Video Experts Team (JVET) of ITU-T SG 16 WP 3 and ISO/IEC JTC 1/SC 29/WG 11, 13th Meeting: Marrakech, MA. pp. 1-13, 07 January 2019.<br>          See pages 1-4. | 1,14-15 |

Form PCT/ISA/210 (second sheet) (July 2022)

**INTERNATIONAL SEARCH REPORT**
Information on patent family members

International application No.

**PCT/KR2022/013787**

| Patent document cited in search report | | | Publication date (day/month/year) | Patent family member(s) | | | Publication date (day/month/year) |
|---|---|---|---|---|---|---|---|
| KR | 10-2021-0036420 | A | 02 April 2021 | CN | 105791860 | A | 20 July 2016 |
| | | | | CN | 105791860 | B | 16 October 2018 |
| | | | | KR | 10-2021-0158888 | A | 31 December 2021 |
| | | | | KR | 10-2439252 | B1 | 31 August 2022 |
| | | | | US | 11057618 | B2 | 06 July 2021 |
| | | | | US | 2021-0297660 | A1 | 23 September 2021 |
| | | | | WO | 2011-149291 | A2 | 01 December 2011 |
| | | | | WO | 2011-149291 | A3 | 19 April 2012 |
| KR | 10-2020-0108432 | A | 18 September 2020 | CN | 111602399 | A | 28 August 2020 |
| | | | | EP | 3741119 | A1 | 25 November 2020 |
| | | | | US | 11265551 | B2 | 01 March 2022 |
| | | | | US | 2019-0222848 | A1 | 18 July 2019 |
| | | | | WO | 2019-143795 | A1 | 25 July 2019 |
| KR | 10-1443701 | B1 | 29 September 2014 | KR | 10-2012-0055761 | A | 01 June 2012 |
| | | | | US | 2012-0128261 | A1 | 24 May 2012 |
| | | | | US | 8532409 | B2 | 10 September 2013 |
| KR | 10-2018-0005121 | A | 15 January 2018 | CN | 114401401 | A | 26 April 2022 |
| | | | | CN | 114401402 | A | 26 April 2022 |
| | | | | EP | 3484160 | A1 | 15 May 2019 |
| | | | | EP | 3985967 | A1 | 20 April 2022 |
| | | | | ES | 2699748 | A2 | 12 February 2019 |
| | | | | KR | 10-2383107 | B1 | 06 April 2022 |
| | | | | US | 2019-0246133 | A1 | 08 August 2019 |
| | | | | WO | 2018-008906 | A1 | 11 January 2018 |

Form PCT/ISA/210 (patent family annex) (July 2022)